# EUROPEAN PATENT SPECIFICATION

(11) **EP 0 250 248 B1**
(45) Date of publication and mention of the grant of the patent: **05.11.1997**
(21) Application number: 87305431.6
(22) Date of filing: 18.06.1987
(51) Int. Cl.: C08G 77/54, C08G 18/38, C08G 18/73, C08G 18/74, C09J 183/10

(54) **Block copolymer, method of making the same, diamine precursors of the same method, method of making such diamines and end products comprising the block copolymer**
Blockcopolymer, Verfahren zu seiner Herstellung, Diaminvorprodukte für dieses Verfahren bzw. Verfahren zu deren Herstellung sowie das Blockcopolymer enthaltende Endprodukte
Copolymère séquencé, sa préparation, diamines comme précurseurs pour sa préparation, méthode pour la préparation de ces diamines et produits finals contenant ce copolymère séquencé

(30) Priority: 20.06.1986 US 876918
(43) Date of publication of application: 23.12.1987
(60) Divisional application: 96107085.1
(73) Proprietor: MINNESOTA MINING AND MANUFACTURING COMPANY, St. Paul, Minnesota 55133-3427 (US)
(72) Inventor: Leir, Charles M Minnesota Mining and, P.O. Box 33427 St.PAul Minnesota 55133 (US); Hoffman, Jerome J Minnesota Mining and, P.O. Box 33427 St.PAul Minnesota 55133 (US); Tushaus, Leonard A Minnesota Mining and, P.O. Box 33427 St.PAul Minnesota 55133 (US); Wiederholt, Gary T Minnesota Mining and, P.O. Box 33427 St.PAul Minnesota 55133 (US)
(74) Representative: Baillie, Iain Cameron

(56) References cited:
- EP-A- 0 078 958
- US-A- 4 570 010
- W.Noll, Chemie und Technologie der Silicone, 2. Ed. (1968), Verlag Chemie, p. 89
- POLYMER, vol. 25, December 1984, pages 1800-1816, Butterworths I. YILGOR et al.: "Segmented organosiloxane copolymers. 1. Synthesis of siloxane-urea copolymers"

## Description

### Field of the Invention

The present invention relates to organopolysiloxane-polyurea block copolymers, a method of making the same and certain novel diaminopolysiloxanes useful as precursors for making the block copolymers. The invention also relates to a method of making the novel diaminopolysiloxanes. In a further aspect, the invention relates to products which employ the block copolymer such as pressure-sensitive adhesive compositions.

### Background of the Invention

Block copolymers have long been used to obtain desirable performance characteristics in various products such as films, adhesives and molded articles. Block copolymers are particularly useful because the blocks can be chemically tailored to optimize desired characteristics.

Siloxane polymers have unique properties derived mainly from the physical and chemical characteristics of the siloxane bond. Such properties include low glass transition temperatures, high thermal and oxidative stability, UV resistance, low surface energy and hydrophobicity, good electrical properties and high permeability to many gases. They also have very good biocompatibility and are of great interest as biomaterials which can be utilized in the body in the presence of blood.

Unfortunately, despite these desirable features, most polydimethylsiloxane polymers based solely on polydimethyl- siloxane lack tensile strength. Consequently, several references suggest ways for conveniently increasing the strength of siloxane polymers especially elastomers. For example, various references suggest that mechanical properties of polysiloxane polymers can be improved substantially through the preparation of block copolymers which include as a repeating unit a "soft" polysiloxane block or segment and any of a variety of other "hard" blocks or segments such as polyurethane. See, for example, (Ward) U.K. Patent GB 2 140 444B, published June 5, 1985, (Cavezzan et al) U.S. Pat. No. 4,518,758, (Nyilas) U.S. Pat. No. 3,562,352, and (Kira) U.S. Pat. No. 4,528,343.

Segmented polydimethylsiloxane polyurea elastomers, with silicone segment molecular weights less than about 4,000, prepared from silicone diamines and diisocyanates are described in Polymer, Vol. 25, pages 1800-1816, December, 1984. This reference reveals that synthesis of higher molecular weight silicone segments could not be achieved by the disclosed method. While not recognized by the authors, the failure to achieve elastomers with a silicone segment molecular weight greater than about 4,000 is believed to be a consequence of a number of factors inherent in the author's preparative method. The defect in this procedure, which has gone unrecognized until the present invention, is though to be caused by the use of excessively high levels of catalyst, water contamination, and the selection of an inefficient reaction procedure, all of which are thought to lead to contamination of the silicone diamine product with significant amounts of monofunctional and non-functional silicone contaminants. These contaminants remain in the polyurea elastomers prepared from such diamines. Non-functional silicone oil acts as a plasticizer which not only weakens the elastomer's tensile strength, but can in time also exude from it. Mono-functional contaminants prevent the reaching of the desired maximum polyurea molecular weight, thus also weakening the polymer.

### Summary of the Invention

The present invention provides organpolysiloxane-polyurea block copolymers having the conventional excellent physical properties associated with polysiloxanes of low glass transition temperature, high thermal and oxidative stability, UV resistance, low surface energy and hydrophobicity, good electrical properties and high permeability to many gases, and the additional desirable property of having excellent mechanical and elastomeric properties. The organopolysiloxane-polyurea block copolymers of the present invention are thought to have good biocompatibility and are capable of being utilized in situations where conventional polysiloxane polymeric materials have found use. The organopolysiloxane-polyurea block copolymers of the present invention are particularly useful, when tackified with a compatible tackifier resin, as pressure sensitive adhesive compositions.

The organosiloxane-polyurethane blocked copolymers of the present invention are segmented copolymers of the (AB)ₙ type which are obtained through a condensation of polymerization of a difunctional organopolysiloxane amine (which produces soft segment) with a diisocyanate (which produces a hard segment) and may include a difunctional chain extender such as a difunctional amine or alcohol, or a mixture thereof.

More specifically, the present invention provides organopolysiloxane-polyurea block copolymers comprising a repeating unit represented by Formula I, as follows: 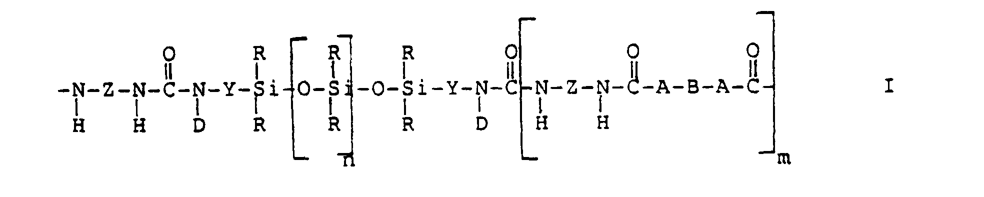 where:
- Z: is a divalent radical selected from phenylene, alkylene, aralkylene and cycloalkylene;
- Y: is an alkylene radical of 1 to 10 carbon atoms;
- R: is at least 50% methyl with the balance of the 100% of all R radicals being monovalent alkyl or substituted alkyl radicals having from 2 to 12 carbon atoms, a vinylene radical, phenyl radical, or substituted phenyl radical;
- D: is hydrogen, an alkyl radical of 1 to 10 carbon atoms or an alkylene radical of 1 to 10 carbon atoms which completes a ring structure including Y to form a hetrocycle, or phenyl;
- B: is a divalent radical selected from alkylene, aralkylene, cycloalkylene, phenylene, polyethylene oxide, polytetramethylene oxide, polycaprolactone, and mixtures thereof;
- A: is difunctional moiety selection from -O- or 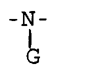 where G is hydrogen, an alkyl radical of 1 to 10 carbon atoms, phenyl, or an alkylene radical which completes a ring structure including B to form a heterocycle;
- n: is a number which is 50 or larger; and
- m: is a number which can be zero to 25, said block copolymer being substantially free from contamination from monofunctional or non-functional non-amine terminated silicone moieties.

In the preferred block copolymer Z is selected from the group consisting of hexamethylene, methylene, bis-(phenylene), isophorone, tetramethylene, cyclohexylene, and methylene dicyclohexylene and R is methyl.

A method of making the organopolysiloxane-polyurea block copolymer is also provided. The method comprises polymerizing under reactive conditions and in an inert atmosphere:
(1) a diamine having a molecular weight of from 5,000 to 70,000, said diamine being substantially free of non-amine terminated silicone polymer moieties, said diamine having a molecular structure represented by Formula II, as follows: 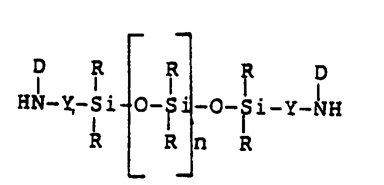 where R, Y and D are defined above; and n>x and is sufficient for the organopolysiloxane diamine to have a molecular weight of at least 4000
(2) at least one diisocyanate having a molecular structure represented by Formula III, as follows:

   OCN-Z-NCO III

   where Z is defined above; and
(3) optionally up to 95 weight percent chain extender selected from diamines, isocyanate capped dihydroxy compounds or mixtures thereof, said chain extender preferably having a molecular structure represented by Formula IV, as follows:

   H-A-B-A-H IV

   where A and B are defined above, wherein
the molar ratio of diamine to diisocyanate in the reaction is maintained in the range of 1:0.95 to 1:1.05.

The diisocyanate useful in the reaction can be a phenylene diisocyanate such as toluene diisocyanate or p-phenylene diisocyanate, hexamethylene diisocyanate, aralkylene diisocyanate such as methylene bis(phenylisocyanate) or tetramethylxylene diisocyanate, or a cycloalkylene diisocyanate such as isophorone diisocyanate, methylene bis(cyclohexyl) diisocyanate, or cyclohexyl diisocyanate.

The reaction to make the novel block copolymer involves the use of the novel organopolysiloxane diamine represented by Formula II.

A method of making the organopolysiloxane diamine represented by Formula II is also provided. The method involves:
(1) combining under reaction conditions and in an inert atmosphere:
   (a) amine functional endblocker of the molecular structure represented by Formula V, as follows: 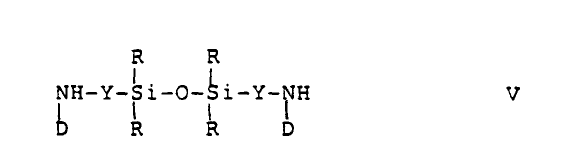 where D, R and Y are defined above;
   (b) sufficient cyclic siloxane to react with said amine functional end blocker to form a lower molecular weight organopolysiloxane diamine having a molecular weight less than about 2,000 and a molecular structure represented by Formula VI, as follows: 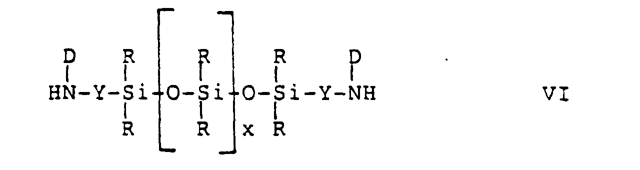 where D, R, and Y are as defined above and x is a number in the range of 4 to 40;
   (c) a catalytic amount not to exceed about 0.1% by weight based on the ultimate weight of the final organopolysiloxane diamine of an essentially anhydrous amine silanolate catalyst which is formed ex-situ and which is preferably of a molecular structure represented by Formula VII, as follows 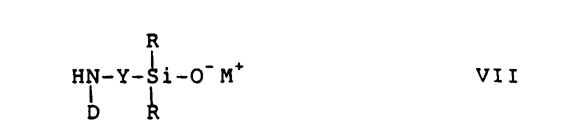 where D, Y and R are as defined above and M⁺ is a cation such as K⁺, Li⁺, or N(CH₃)₄⁺
(2) continuing the reaction until substantially all of the amine functional end blocker is consumed; and
(3) adding additional cyclic siloxane until the novel organopolysiloxane diamine represented by Formula II is obtained.

The preferred amine silanolate catalyst is 3-aminopropyl dimethyl tetramethylammonium silanolate. The catalytic amount of the amine silanolate catalyst is preferably less than 0.5 weight percent, most preferably 0.005 to about 0.03 weight percent, based upon the ultimate weight of the final organopolysiloxane.

The preferred reaction conditions comprise a reaction temperature range of about 80°C to about 90°C, a reaction time of about 5 to 7 hours, and the dropwise addition of the additional cyclic siloxane.

### Detailed Description

The reaction to produce the block copolymer of the invention involves mixing under reactive conditions the organopolysiloxane diamine, diamine and/or dihydroxy chain extender, if used, and diisocyanate to produce the block copolymer with hard and soft segments respectively derived from the diisocyanate and organopolysiloxane diamine. The reaction is typically carried out in a reaction solvent.

Preferred reaction solvents are those which are unreactive with the diisocyanates and which maintain the reactants and products completely in solution throughout the polymerization reaction. It has been found that chlorinated solvents, ethers, and alcohols perform best in the case of aliphatic diisocyanates with methylene chloride, tetrahydrofuran, and isopropyl alcohol being preferred. For aromatic diisocyanates such as 4,4'-methylene-bis(phenylisocyante) (MDI), a mixture of tetrahydrofuran with 10% to 25% by weight of dipolar aprotic solvent such as dimethylformamide is preferred.

The starting materials and reaction solvents are usually initially purified and dried and the reaction is carried out, under an inert atmosphere such as dry nitrogen or argon.

Suitable diisocyanates include toluene diisocyanate and hexamethylene diisocyanate. Preferred diisocyanates include 4,4'-methylene-bis(phenylisocyanate) (MDI), 4,4'-methylenebis(cyclohexyl)diisocyanate (H-MDI) and isophorone diisocyanate.

As previously mentioned, the reaction to produce the organopolysiloxane diamine employs an essentially anhydrous amine functional silanolate catalyst preferably represented by Formula VII. The preferred catalyst in this polymerization is 3-aminopropyl dimethyl tetramethylammonium silanolate, itself a novel compound, obtained as a crystalline solid from the reaction of one molar equivalent of 1,3 bis-(3-aminopropyl) tetramethyldisiloxane with 2 molar equivalents of tetramethylammonium hydroxide pentahydrate in tetrahydrofuran under reflux, followed by drying under vacuum for 5 hours (0.1 mm) at 60°C.

Chain extenders may be incorporated with the other reactants to provide other physical properties in the claimed blocked copolymer. The chain extenders may be short chain diamines such as hexamethylene diamine, xylylene diamine, 1,3-di(4-piperidyl)propane (DIPIP), N(-2-aminoethyl propylmethyldimethoxysilane (DAS), and piperazine, with piperidyl propane being preferred.

Polymeric diamines as well as polymeric glycols may also be copolymerized with the polysiloxane diamines, diisocyanates, and other optional non-silicone soft segments as chain extenders to impart additional desirable properties to the silicone polyureas. The resultant copolymeric segments may comprise from as little as 5% to as much as 95% of the copolymer formulation, depending on the properties of the resultant copolymer desired.

Polymeric diamines useful as nonsilicone soft segments are those which can be obtained with functionality approaching 2.0 such as polytetramethylene oxide diamine of from 5,000 to 25,000 molecular weight, with a molecular weight in the range of 8,000 to 15,000 being most preferred. Suitable polymeric diols include polytetramethylene oxide glycol, polyethylene oxide glycol, polypropylene oxide glycol, and polycaprolactone glycol. In preparing the polyureas from a mixture of polysiloxane and polytetramethylene oxide diamines, the diamines are dissolved together in a suitable solvent such as methylene chloride and the diisocyanate and chain extender, if used, are introduced into the mixture, at a combined amine to diisocyanate molar ratio of 1:0.95 to 1:1.05. A two stage procedure is required to copolymerize the polymeric glycols with silicone diamines in which the glycol is first heated with the diisocyanate in an inert solvent such as toluene or tetrahydrofuran with a catalytic amount of a tin compound such as stannous octoate or dibutyl tin dilaurate for a sufficient amount of time, e.g., one half to one hour, until all of the alcohol groups have been capped with isocyanate. In the second stage, the polysiloxane diamine is added followed by any optional diamine chain extenders to provide the polyether or polyester polyurethane polysiloxane polyurea block copolymer, with the combined molar ratio of amine plus alcohol to isocyanate being held in the range of 1:0.95 to 1:1.05 to provide for complete reaction.

A significant feature of the invention is the discovery that substantially pure organopolysiloxane diamines can be produced with a preselected desired molecular weight in excess of 5,000 with excellent difunctionality. It is thought such organopolysiloxane diamines are produced according to the present invention with such high purity because of the presence of the following key process conditions during the preparation:
1. utilize an anhydrous amino alkyl functional silanolate catalyst such as tetramethylammonium 3-aminopropyldimethyl silanolate;
2. use a minimum amount of this catalyst, preferably less than 0.05% by weight based upon the weight of the silicone diamine being prepared; and
3. run the reaction in two stages, as herein described.

In the first stage of the reaction, a low molecular weight silicone diamine having a structure as defined by Formula VI is prepared by reacting an amine functional disiloxane endblocker of the type represented by Formula V with a cyclic siloxane in the presence of a catalytic amount of anhydrous amine functional silanolate represented by Formula VII in an inert atmosphere such as nitrogen or argon. The amount of catalyst employed should be less than 0.05 weight percent, preferably 0.005 to about 0.03 weight percent, by weight of the resultant diamino silicone. While not wanting to be bound by theory, it is thought that, by using a minimum amount of an anhydrous amine functional silanolate catalyst, the number of inactive chain ends that are produced by catalyst molecules and spurious water are held to a minimum.

The reaction is typically carried out in bulk at a temperature of 80-90°C, and under these conditions is usually complete in about 0.5-2 hours, as judged by substantially complete disappearance of the endblocker of the reaction mixture as determined by vapor phase chromatography. An intermediate organopolysiloxane diamine is obtained having a molecular weight of less than about 2,000 and a molecular structure represented by Formula VI.

The second stage of the reaction involves the slow addition of the remainder of the cyclic siloxane required to achieve the desired molecular weight, preferably dropwise addition, at such a rate that the cyclic siloxane is incorporated into the polymer about as fast as it is added, usually in about 5 to 7 hours at the reaction temperature of 80-90°C. The desired organopolysiloxane diamine is produced having a molecular weight in excess of 5,000 and a structure as defined by Formula II. By utilizing this two-stage method with a minimum amount of amine functional anhydrous silanolate catalyst, silicone diamines of Formula II may be consistently prepared in any desired molecular weight from about 5,000 to about 70,000 having excellent difunctionality with little contamination from monofunctional and nonfunctional polysiloxane impurities.

The prior art method for the preparation of amine terminated silicones from the equilibration of cyclic siloxanes, amine functional disiloxanes and basic catalysts such as tetramethyl ammonium hydroxide or siloxanolate has proven unsatisfactory for obtaining diamino organopolysiloxanes of molecular weight in excess of 4,000 with good difunctionality. These poor results are thought to be caused by a number of deleterious factors inherent in the previous methods, which include running the reaction in a single stage or all at once with the catalyst, amine functional endblocker and all the cyclic siloxane together. This results in incomplete incorporation of endblocker and higher than calculated molecular weights. The use of an excessive amount of a nonfunctional hydrated catalyst produces a significant percentage of non-amine terminated silicone polymers as impurities in the final product. These results are obviated in the method of the present invention by the use of an essentially anhydrous amine functional catalyst at a minimum concentration in a two-stage reaction as described above.

The segmented polysiloxane block copolymers of this invention can be prepared in a wide range of useful properties through variations in the ratio of soft segments to hard segment, the nature of the chain extenders and other polymers employed, and the molecular weight of the polysiloxane segment. For example, the combination of relatively low molecular weight (4,000-7,000) silicone segments with relatively high hard segment content provide stiff, hard, yet flexible rubbers.

It has been discovered that these copolymers are suitable for use as release coatings for a variety of pressure-sensitive adhesives. They have a high degree of difunctionality with little contamination from monofunctional or nonfunctional siloxane impurities, virtually eliminating problems such as re-adhesion. They have good stability in solution, are film-forming, and have unusually high strength plus desirable mechanical and elastomeric properties. In addition, they do not require high temperature curing or long processing times, a decided advantage in pressure-sensitive tape manufacturing.

As mentioned previously, the segmented copolymers of this invention may be prepared with a wide range of useful properties through variations in the ratio of soft segments to hard segments, the amount and nature of the chain extenders employed, and the molecular weight of the polysiloxane segment. These variations give rise to varying amounts of release, i.e., from 10 g/cm or less, to about 350 g/cm. Certain copolymers are especially useful as low-adhesion backsizes (LABs) for removable pressure-sensitive adhesives such as masking tapes. LABs for tapes in roll form ideally exhibit release toward the adhesive of about 60 to 350 g/cm width. The preferred hard segment content for copolymers used as release agents and LABs is from about 15% to about 70%. Preferred ranges vary, depending on the type of adhesive and its ultimate use, i.e., the preferred range of LABs used in masking tapes is from about 25% to about 60%. Copolymers having this range exhibit the necessary combination of adequate unwind on fresh tape and moderate unwind after adverse aging conditions of heat and humidity, plus acceptable paint masking performance, paint flaking resistance and the ability to hold when used in overtaping applications.

Block copolymers of medium molecular weight silicone segments (7,000-25,000) alone, or combined with other elastomeric blocks and a hard segment content in the 15-25% range, provide highly elastic, resilient, quite strong silicone elastomers. With the high difunctionality of the silicone diamines of this invention, it is possible to prepare silicone elastomers even with very high molecular weight silicone segments (25,000-70,000) and hard segment content as low as 0.5 to 10%. Such polymers are extremely soft and deformable and naturally of low tensile strength; however, it has been discovered that when these silicone polyureas are blended with an approximately equal weight of hydroxy-functional silicone tackifier resins commercially available as the MQ series, such as "MQ" CR-524A and CR-525A from the General Electric Company, a new type of silicone pressure-sensitive adhesive is obtained. Through variation in silicone molecular weight and hard segment content, pressure-sensitive adhesive can be formulated with an optimum balance of tack, peel adhesion, and shear holding properties without the necessity of post-curing reactions. Furthermore, since the cohesive strength of these polymers is a result of physical forces of attraction between urea groups and not chemical cross-linking, these silicone polyurea pressure-sensitive adhesives can be coated onto tapes by hot melt extrusion processes.

This invention is further illustrated by the following examples which are not intended to be limiting in scope.

### EXAMPLE 1

### Preparation of the Catalyst

A 100 ml three-necked round bottom flask equipped with magnetic stirrer, argon inlet and condenser fitted with a drying tube was charged with 12.4 g (0.05 mole) of 1,3-bis (3-aminopropyl) tetramethyldisiloxane, 18.1 g tetramethylammonium hydroxide pentahydrate and 30 ml of tetrahydrofuran. The mixture was stirred and heated under reflux in an argon atmosphere for 1 1/2 hours until a vapor phase chromatograph (VPC) showed complete disappearance of the disiloxane peak. Upon cooling, the mixture separated into two layers. The tetrahydrofuran was allowed to distil from the mixture until a pot temperature of 75°C was achieved, leaving a yellow oil which was stirred and heated under vacuum (0.1 mm) in an oil bath at 60°C until no more volatiles distilled (ca 5 hours). The crude product, a yellow waxy solid, was recrystallized from tetrahydrofuran (THF) under argon, filtered and dried under vacuum to give 3-aminopropyl dimethyl tetramethylammonium silanolate as a white crystalline solid. The chemical structure was confirmed by nuclear magnetic resonance analysis (NMR), and the product was stored at room temperature under argon.

### EXAMPLE 2

### Preparation of Silicone Diamine

A 500 ml three-necked round bottom flask equipped with thermometer, mechanical stirrer, dropping funnel and dry argon inlet was charged with 3.72 g bis (3-aminopropyl) tetramethyldisiloxane and 18 g of octamethylcyclotetrasiloxane (D₄) which had been previously purged for 10 minutes with argon. The flask contents were heated to 80°C with an oil bath and a trace (about 0.03 to 0.05 g) of the catalyst described in Example 1 was added via a spatula. The reaction was stirred at 80°C and after 30 minutes of stirring had become quite viscous. VPC showed that the endblocker had completely disappeared. To the resultant reaction mixture (which consisted of a 1,500 molecular weight silicone diamine, cyclic siloxanes and active catalyst) was added dropwise over a six hour period 330 g of argon-purged D₄, resulting in a further rise in the viscosity. Heating the reaction flask contents at 80°C was continued overnight. The catalyst was decomposed by heating at 150°C for 1/2 hour and the product was stripped at 140° at 0.1 mm pressure until no more volatiles distilled (ca. 1 1/2 hr.), resulting in 310 g of a clear, colorless viscous oil (a yield of 88% of theoretical). The molecular weight of the product determined by acid titration was 21,200.

Using this procedure, but varying the ratio of endblocker to D₄, silicone diamines with molecular weights from 4,000 to as high as 70,000 were prepared.

### EXAMPLE 3

### Preparation of Silicone Polyurea

Under argon, to a solution of 10.92 g of the 21,200 MW silicone diamine described in Example 2 in 65 ml of methylene chloride was added, all at once, a solution of 0.80 g of isophorone diisocyanate (IPDI) in 15 ml of CH₂Cl₂, resulting in a clear solution. To the clear solution was added dropwise a solution of 0.65 g 1,3-dipiperidyl propane (DIPIP) in 10 ml CH₂Cl₂. Toward the end of the addition, the viscosity rose substantially until the magnetic stirrer almost stopped, producing a clear solution of silicone polyurea with a molar ratio of silicone diamine/DIPIP/IPDI of 1:6:7. This solution was cast onto a glass plate and the solvent allowed to evaporate overnight, resulting in a clear film which was quite strong and highly elastic, and had a tensile strength of 5,210 kPa, 300% elongation, and a permanent set of 5%.

The tensile strength, elongation and permanent set values were all measured at break. The tensile strength, percent elongation, and percent permanent set of the elastomeric materials were determined according to ASTM D 412 - 68 under ambient conditions at a temperature of about 23°C. According to this procedure, elastomer specimens, cast from solvent, were dried, cut to form "dumbell" - shaped configurations, and the dumbells were stretched to the breaking point. The stretching was accomplished by use of a tensile testing device which recorded the tensile strength during stretching until the test specimen broke. The tensile strength at break in kPa was recorded. The device also recorded the percent elongation at break to the nearest 10 percent. The percent permanent set was determined by carefully fitting together the broken pieces of the test dumbell 10 minutes after the specimen had broken, measuring the combined length of the broken and stretched specimen pieces, dividing this measured length by the original length of the specimen before stretching, and multiplying the quotient by 100.

### EXAMPLE 4

### Preparation of Silicone Polyurea

Under argon, to a solution of 2.06 g isophorone diisocyanate (IDPI) in 30 ml CH₂Cl₂ was added a solution of 0.87 g 1,3-dipiperidyl propane (DIPIP) in 20 ml CH₂Cl₂. A solution of 9.8 g of silicone diamine of 9,584 molecular weight in 20 ml CH₂Cl₂ was then added dropwise. To the resulting clear solution was added dropwise a solution of 0.86 g of DIPIP in 10 ml of CH₂Cl₂. Toward the end of the addition, the reaction mixture became very viscous. After 1/2 hour, the resultant viscous solution was cast onto a glass plate and the solvent allowed to evaporate, producing an elastomer film of silicone polyurea with a diamine/DIPIP/IPDI molar ratio of 1:8:9, which was clear, yet stiff with a tensile strength of 8,453 kPa, 200% elongation and 15% permanent set.

Silicone polyureas with a wide range of elastomeric properties were prepared by procedures illustrated in the examples above. The properties of a number of these silicone elastomers are listed in Table I below as Examples 5-15.

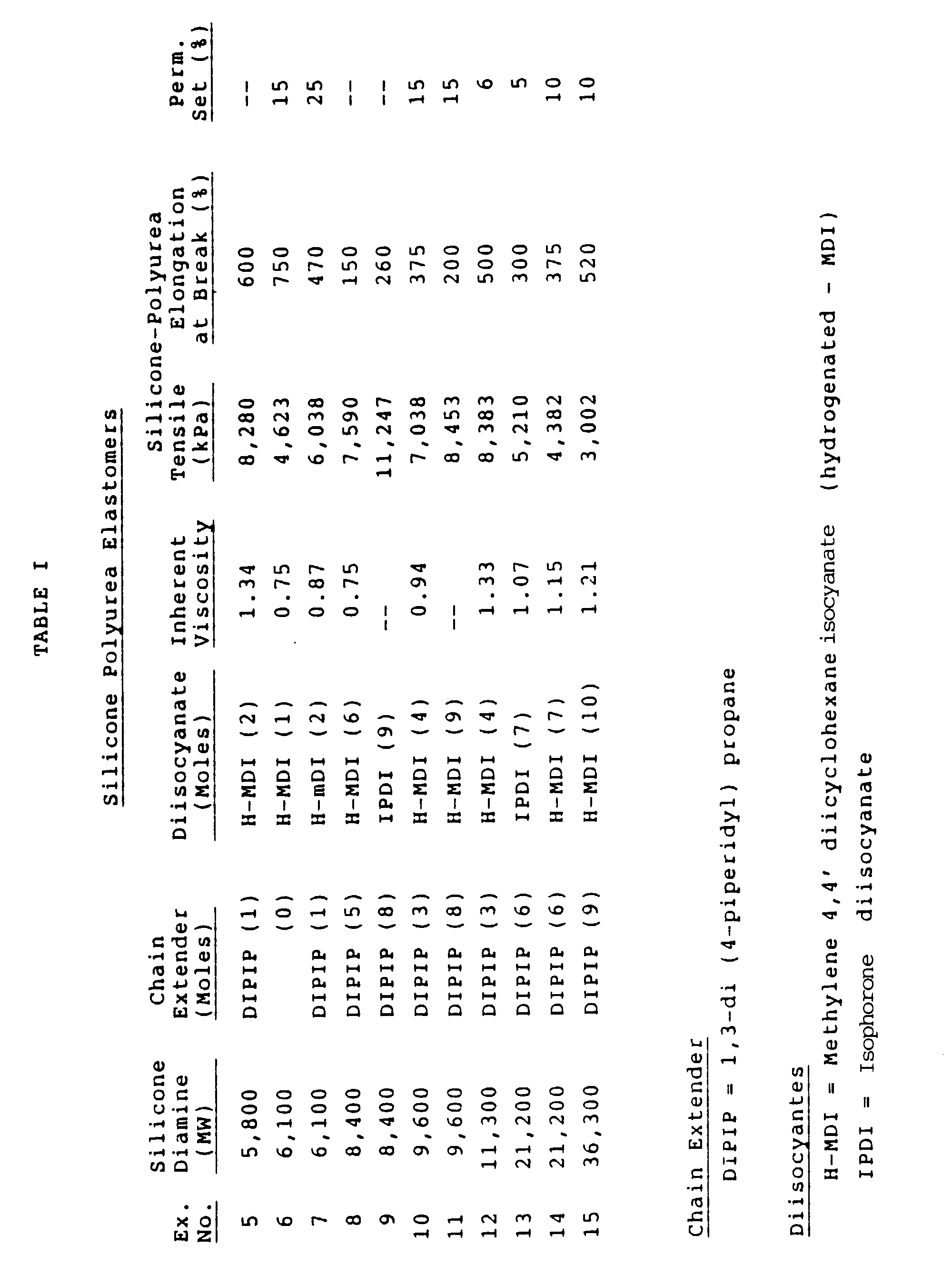

### EXAMPLE 16

### Preparation of Silicone Diamine by the Prior Art Procedure

To 10 g of octamethylcyclotetrasiloxane (D₄), previously purged for 20 minutes with argon, was added 0.08 g of tetramethyl ammonium hydroxide pentahydrate. After stirring at 80°C under argon for 30 minutes, the mixture became very viscous indicating that conversion to tetramethyl ammonium siloxanolate (the actual catalyst) had occurred. A solution of 2.5 g bis (aminopropyl) tetramethyl disiloxane endblocker (0.01 mole) in 105 g of D₄ was added all at once to produce a clear solution which was stirred at 80°C to 85°C under argon to provide an assumed 85% yield of polymer having a theoretical molecular weight of 10,000.

After heating the clear solution for 24 hours, it was determined by VPC that a substantial amount of endblocker had not been incorporated into the polymer. After 48 hours, although VPC indicated that some unincorporated endblocker was still present, the reaction was terminated by heating to 150°C for 30 minutes. The resultant clear, colorless oil was stripped under aspirator vacuum at 120° to 130°C for one hour to remove all volatiles, leaving 103 g (87% yield) of product.

Titration of the product with 0.1N hydrochloric acid revealed an amino content of 0.166 meg/g or a calculated molecular weight of 12,043 assuming the product is completely difunctional.

### EXAMPLE 17

### Preparation of Silicone Polyurea Elastomer Using Prior Art Silicone Diamine

A 100 ml one-neck round bottom flask was charged with 10.51 g of the 12,043 molecular weight silicone diamine of Example 16 and dissolved in 50 ml of CH₂Cl₂. A solution of 0.91 g H-MDI in 10 ml CH₂Cl₂ was added all at once with stirring. The resulting clear solution was treated dropwise with stirring with a solution of 0.55 g 1,3-bis(4-piperidyl)propane (DIPIP) in 5 ml of CH₂Cl₂. Toward the end of the addition, the solution became viscous but remained clear. After 1/2 hour, the viscous solution was cast on a glass plate, leaving an elastomeric film, upon solvent evaporation, of a polyurea with a silicone diamine/DIPIP/H-MDI molar ratio of 1:3:4.

### EXAMPLE 18

### Comparison of Elastomeric Properties of Silicone Polyureas Prepared with "Prior Art" Silicone Diamines, and Present Invention Diamines

The tensile strength, inherent viscosity, elongation at break, and permanent set of the silicone polyurea prior art elastomer of Example 17 was compared to silicone polyurea elastomer of the same formulation (silicone diamine/DIPIP/H-MDI molar ratio of 1:3:4) but prepared by the two-stage method according to the present invention. Example 12 was the closest formulation with a diamine having molecular weight of 11,360. Results are shown in Table II.

**TABLE II**

| Silicone Polyurea Elastomer Comparison | | | | |
|---|---|---|---|---|
| Example | Inherent Viscosity | Tensile (kPa) | Elongation at Break (%) | Perm Set (%) |
| Ex. 17 (prior art) | 0.51 | 3,312 | 290 | 3 |
| Ex. 12 (the invention) | 1.33 | 8,315 | 500 | 6 |

All of the physical properties compared were superior for the product of the present invention.

### EXAMPLE 19

### A Silicone-Polyether Polyurea Copolymer

A mixture of 8.2 g of a silicone diamine of 8215 molecular weight, 7.3 g of 7,300 molecular weight polytetramethylene oxide diamine, and 0.67 g of DIPIP was dissolved in a solvent system of 90 ml isopropyl alcohol and 50 ml of CH₂Cl₂. With stirring at room temperature, 1.11 g of isophorone diisocyanate was added dropwise. Toward the end of the addition, the solution became quite viscous but remained clear and did not gel. A film was cast from the viscous solution, dried and the resulting crystal clear silicone-polyether elastomer had a tensile strength of 19,458 kPa, 650% elongation and 6% permanent set.

### EXAMPLE 20

### Silicone-Polyester Polyurethane Polyurea Copolymer Elastomers

A one liter, three-necked round bottom flask was charged with 19.2 g of 2000 molecular weight polycaprolactone diol ("Tone"-0240 from Union Carbide) and 100 ml toluene. The solution was heated to boiling and a small quantity of solvent was allowed to distill from the flask to azeotropically dry the contents. Isophorone diisocyanate (9.92 grams) was added, followed by three drops of the catalyst dibutyl tin dilaurate. After an initial vigorous reaction, the clear solution was heated under reflux for 1/2 hour. The reaction was diluted to 300 ml with toluene and a solution of 24 g of a 10,350 molecular weight silicone diamine in 50 ml of toluene was added fairly rapidly with stirring. The resulting clear, colorless solution was treated rapidly while stirring with a solution of 6.88 g of 1,3-bis (4-piperidyl) propane in 100 ml of isopropyl alcohol. The reaction became quite viscous but remained clear. After an additional hour, the solution was cast in a tray and the solvent allowed to evaporate. The resulting elastomer, a silicone-polyester polyurethane polyurea, contained 40% silicone and was clear, strong and highly elastic.

### EXAMPLE 21

### Preparation of Pressure-Sensitive Adhesive Using Polysiloxane Polyurea Block Copolymer

A 200 ml round bottom flask was charged with 23.23 g of freshly prepared silicone diamine of 21,213 molecular weight and 35.3 g of toluene. The solution was stirred at room temperature and 0.29 g of H-MDI was added followed by another 28 g toluene. After 20 minutes, the solution had become very viscous. The pressure-sensitive adhesive was produced by adding 39.2 g of a 60% solution in xylene of an MQ silicone resin composition available from General Electric Company as CR-524A. The final solids content was adjusted to 35% by the further addition of 10.3 g of toluene. The resulting pressure-sensitive adhesive solution had a silicone polyurea gum to MQ resin weight ratio of 1:1.

By a similar procedure, a number of other silicone polyurea pressure-sensitive adhesives were prepared by blending the polyurea obtained from the reaction of silicone diamines of various molecular weights with equimolar amounts of diisocyanates with an equal weight of MQ silicate resin. These were coated onto polyester film at a 25 to 33 µm thickness to provide pressure-sensitive adhesive flexible sheet materials.

The performance of these examples was evaluated by two standard test methods as described by the American Society of Testing and Materials (ASTM) of Philadelphia, Pennsylvania and the Pressure Sensitive Tape Council (PSTC) of Glenview, Illinois. These are Procedures No. 1 (peel adhesion) and No. 7 (shear strength).

### Peel Adhesion

### ASTM P3330-78 PSTC-1 (11/75)

Peel adhesion is the force required to remove a coated flexible sheet material from a test panel measured at a specific angle and rate of removal. In the examples this force is expressed in Newtons per 100 mm (N/100 mm) width of coated sheet. The procedure follows:
1. A 12.5 mm width of the coated sheet is applied to the horizontal surface of a clean glass test plate with at least 12.7 lineal cm in firm contact. A hard rubber roller is used to apply the strip.
2. The free end of the coated strip is doubled back nearly touching itself, so the angle of removal will be 180°. The free end is attached to the adhesion tester scale.
3. The glass test plate is clamped in the jaws of the tensile testing machine which is capable of moving the plate away from the scale at a constant rate of 2.3 meters per minute.
4. The scale reading in Newtons is recorded as the tape is peeled from the glass surface. The data is recorded as the average value of the range of numbers observed during the test.

### Shear Holding Strength

### (Reference: ASTM: D3654-78; PSTC-7)

The shear strength is a measure of the cohesiveness or internal strength of an adhesive. It is based upon the amount of force required to pull an adhesive strip from a standard flat surface in a direction parallel to the surface to which it has been affixed with a definite pressure. it is measured in terms of time (in minutes) required to pull a standard area of adhesive coated sheet material from a stainless steel test panel under stress of a constant, standard load.

The tests were conducted on adhesive coated strips applied to a stainless steel panel such that a 12.5 mm portion of each strip was in firm contact with the panel with one end portion of the tape being free. The panel with coated strip attached was held in a rack such that the panel forms an angle of 178° with the extended tape free end which is then tensioned by application of a force of one kilogram applied as a hanging weight from the free end of the coated strip. The 2° less than 180° is used to negate any peel forces thus insuring that only the shear forces are measured in an attempt to more accurately determine the holding power of the tape being tested. The time elapsed for each tape example to separate from the test panel is recorded as the shear strength.

For the examples of pressure-sensitive adhesives prepared from silicone polyureas without chain extenders, the peel adhesion and shear results are listed in Table III.

**TABLE III**

| Silicone Polyurea Pressure-Sensitive Adhesive [(1:1 Silicone diamine/H-MDI) Gum: MQ resin = 1:1] | | | |
|---|---|---|---|
| Ex. No. | Silicone Diamine MW | PSA | |
| | | Adhesion N/100 mm | Shear (23°C) Minutes |
| 22 | 10,300 | 12 | 10,000+ |
| 21 | 21,200 | 43 | 10,000+ |
| 23 | 36,380 | 61 | 234 |
| 24 | 53,500 | 52 | 382 |

### EXAMPLES 25-29

### Preparation of Pressure-Sensitive Adhesives Using Polysiloxane Polyurea Block Copolymers With Chain Extenders

A solution of 17.55 g of 34,000 molecular weight silicone diamine (0.0585 meq/g) in 100 ml of methylene chloride was rapidly added at room temperature with stirring to a solution of 0.54 g of methylene bis [4,4' dicyclohexyl] isocyanate (H-MDI) in 50 ml of methylene chloride. A solution of 0.12 g of 1,3-bis(4-piperidyl) propane (DIPIP) in 25 ml of methylene chloride was slowly added dropwise resulting in a silicone-polyurea solution which became viscous but did not gel upon completion of the second addition. To prepare the pressure-sensitive adhesive, there was added 30.7 g of a 60% xylene solution of MQ silicate resin (CR 524A) producing 1:1 silicone block copolymer to tackifier weight ratio. The solution containing this adhesive was cast on polyester to produce a 33 µm adhesive film which was tested according to Pressure Sensitive Tape Council (PSTC) Procedures No. 1 (peel adhesion) and No. 7 (shear strength). The results showed 50 N/100 mm of peel adhesion to glass and 10,000 plus minutes of shear holding time. This is compared to a number of other pressure- sensitive adhesive compositions as shown in Table IV.

**TABLE IV**

| Silicone Polyurea Pressure-Sensitive Adhesive (With Chain Extender) | | | | | |
|---|---|---|---|---|---|
| | Silicon-Polyurea Gum | | | PSA | |
| Ex. No. | Silicone Diamine | DIPIP Chain Extender | H-MDI | Peel Adhesion | Shear Holding 23°C |
| | (MW) | (Moles) | (Moles) | n/100 mm | Minutes |
| 26 | 21,000 | 4 | 5 | 10 | 10,000+ |
| 27 | 21,000 | 3 | 4 | 28 | 10,000+ |
| 28 | 19,000 | 2 | 3 | 31 | - |
| 25 | 34,000 | 3 | 4 | 50 | - |
| 29 | 55,000 | 2 | 3 | 76 (split) | - |

### EXAMPLE 30

### Preparation of Copolymer to be used as Release Agent

### Composition:

| | |
|---|---|
| PDMS (MW-5560) | 25 parts by weight |
| PCL (MW-1250) | 35 parts by weight |
| DIPIP/IPDI | 40 parts by weight |

### Procedure:

Polycaprolacton diol (PCL)(35q) in toluene was refluxed under nitrogen for 30 minutes with the entire charge of IPDI (24.06g) in the presence of a catalytic amount (3 drops) of dibutyl tin dilaurate. After reflux, heat was removed and toluene as added to dilute the entire mass to 500 ml. After cooling to room temperature, the PDMS diamine (25.0g) along with 100 ml toluene was added and stirred for 15 minutes.

Then DIPIP (15.94g), dissolved in 100 ml isopropanol, was added slowly over a period of 2-3 minutes and stirred for 30 minutes. An increase in viscosity was observed within 5 minutes. The entire solution remained clear and colorless throughout the procedure. A final dilution with toluene brought the solids level to approximately 10% in the solvent blend of 90:10 ratio of toluene:isopropanol.

A 1.5 mil urethane saturated smooth crepe paper backing was primed with a chloroprene latex, Neoprene™ (N-115) made by DuPont, in one trip. In a second trip, the LAB was applied from a metering roll to the opposite side of the backing using a 50% solid solution in toluene/isopropanol. Finally, in a third trip, to the primer side was applied a latex adhesive (45% natural rubber/57% Piccolyte™ S-65, a poly β-pinene tackifying resin with a ring and ball softening point of 65°C made by Hercules Co.), of coating weight of 4.4 mg/cm².

### EXAMPLE 31

### Composition:

| | |
|---|---|
| PDMS (MW 5590) | 10% |
| PCL (MW 1240) | 60% |
| DIPIP/IPDI | 15% |
| DAS/IPDI | 15% |

This was coated similar to the procedure used in Example 30.

### EXAMPLE 32

### Composition:

| | |
|---|---|
| PDMS (MW 4900) | 23% |
| PCL (MW 1250) | 42% |
| DIPIP/IPDI | 35% |

This was coated similar to the procedure used in Example 30. The test results from the above examples are tabulated in Table V.

### EXAMPLE 33

### Composition:

| | |
|---|---|
| PDMS (MW 4900) | 20% |
| PCL (MW 1250) | 20% |
| DIPIP/IPDI | 60% |

This was coated similar to the procedure of Example 30.

### TESTING

The performance of Examples 30-33 was evaluated by the standard test method for peel adhesion as described supra and the unwind test described below.

### UNWIND TEST

Testing was accomplished using an Instron-type testing at 90° angle and 228.6 cm/min (90 (in/min) separation.

**TABLE V**

| UNWIND | | | |
|---|---|---|---|
| EXAMPLE | 3 WEEKS RT | 65°C/16 HRS | 90%-50% RH |
| 30 | 17 | 21 | 21 |
| | | | |
| 31 | 23 | 12 | 24 |
| 32 | 22 | 12 | 20 |
| 33 | 11 | 17 | n/a |

| PEEL ADHESION TEST | | | |
|---|---|---|---|
| EXAMPLE | 3 WEEKS RT | 65°C/16 HRS | 90%-50% RH |
| 30 | 53 | 52 | 51 |
| | | | |
| 31 | 50 | 50 | 50 |
| 32 | 51 | 49 | 52 |
| 33 | 50 | 50 | -- |
| RT = 22°C/50% RH 65°C/16 Hrs. was followed by 24 Hrs. at 22°C/50% RH 90%-50%: Tape was aged at 32°C/90% RH for 2 weeks followed by 1 week at 22°C/50% RH | | | |

All examples were coated from 5% solutions on ULTRA backing using a metering roll.

## Claims (Claims for the following Contracting State(s): BE, CH, LI, DE, FR, GB, IT, NL, SE)

1. An anhydrous solid compound of general formula: 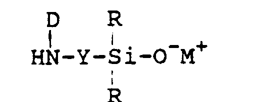 where:
D is hydrogen, an alkyl group of 1 to 10 carbon atoms, phenyl or an alkylene radical of 1 to 10 carbon atoms which completes a ring structure including Y to form a heterocyclic ring;
Y is an alkylene radical of 1 to 10 carbon atoms;
R is a monovalent optionally substituted alkyl radical having from 2 to 12 carbon atoms, a vinylidene radical or an optionally substituted phenyl radical, subject to the proviso that at least 50% of the R radicals are methyl, and
M⁺ is the cation K⁺, Li⁺ or N(CH₃)₄ ⁺.

2. A method of making an organopolysiloxane diamine comprising the steps:
i) combining under reaction conditions;
a) amine-functional end blocker of the general formula 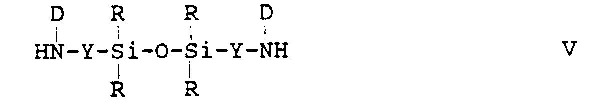 where R, Y and D are as defined in claim 1;
b) sufficient cyclic siloxane to react with said amine-functional end blocker to form an organopolysiloxane diamine having a molecular weight less than 2,000 and the general formula: 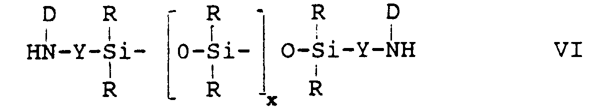 where 4 ≤ x ≤ 40 and
c) a catalytic amount not exceeding 0.1% by weight based on the ultimate weight of the final organopolysiloxane diamine of an essentially anhydrous amine silanolate catalyst which is formed ex situ;
ii) continuing the reaction until substantially all of said amine-functional end blocker is consumed, and
iii) adding additional cyclic siloxane until an organopolysiloxane diamine of general formula: 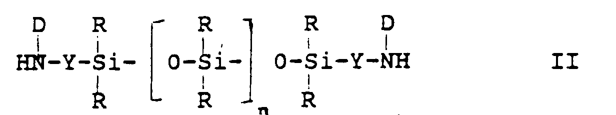 wherein n > x and is sufficient, for the organopolysiloxane diamine to have a molecular weight of at least 4000.

3. A method as claimed in claim 2 wherein said anhydrous silanolate catalyst has the general formula defined in claim 1.

4. A method as claimed in claim 2 or claim 3 wherein said catalytic amount is less than 0.05% by weight of the organopolysiloxane diamine of general formula II.

5. A method as claimed in claim 4 wherein said catalytic amount is from 0.005 to 0.03 weight percent of the organopolysiloxane diamine of general formula II.

6. A method as claimed in any of claims 2 to 5 wherein said reaction conditions comprise a reaction temperature range of about 80°C to about 90°C, a reaction time of about 5 to 7 hours, and dropwise addition of said additional cyclic siloxane.

7. An organopolysiloxane diamine of general formula II as defined in claim 2, said organopolysiloxane diamine having a molecular weight of 5,000 to 70,000, and being substantially free of non-amine terminated silicone polymer moieties.

8. An organopolysiloxane diamine according to claim 7 being obtainable by a method as claimed in any one of claims 2 to 6.

9. A method of making an organopolysiloxane-polyurea block copolymer, comprising the polymerisation of:
i) a diamine as claimed in claim 7;
ii) at least one diisocyanate having the formula:
OCN-Z-NCO
where Z is a divalent radical selected from phenylene, alkylene, aralkylene and cycloalkylene, the molar ratio of diamine to diisocyanate being maintained in the range 1:0.95 to 1:1.05, and
iii) optionally up to 95 weight percent chain extender selected from diamines, isocyanate-capped dihydroxy compounds or mixtures thereof.

10. A method as claimed in claim 9 wherein said diisocyanate is toluene diisocyanate, p-phenylene diisocyanate or bis-(phenylene) diisocyanate.

11. A method as claimed in claim 9 wherein said diisocyanate is tetramethylene diisocyanate or hexamethylene diisocyanate.

12. A method as claimed in claim 9 wherein said diisocyanate is methylene bis(phenylisocyanate) or tetramethylxylene diisocyanate.

13. A method as claimed in claim 9 wherein said diisocyanate is cyclohexyldiisocyanate, isophorone diisocyanate or methylene dicyclohexyl diisocyanate.

14. Organopolysiloxane-polyurea block copolymer comprising the recurring unit: 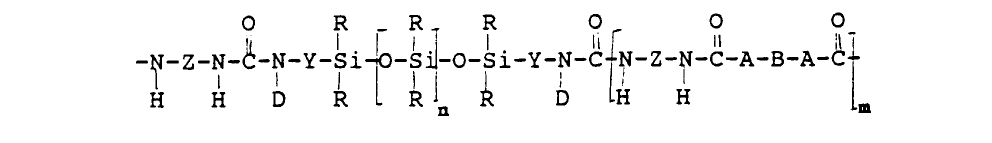 wherein
Z is as defined in claim 9;
R, Y and D are as defined in claim 1;
B is a divalent radical selected from alkylene, aralkylene, cycloalkylene, phenylene, polyethylene oxide, polytetramethylene oxide, polycaprolactone and mixtures thereof;
A is a difunctional moiety selected from -O- and 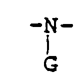 where G is hydrogen, an alkyl radical of 1 to 10 carbon atoms, phenyl, or an alkylene radical which completes a ring structure including B to form a heterocycle;
n≥50, and
o ≤ m ≤ 25,
said block copolymer being substantially free from contamination from monofunctional or non-functional non-amine terminated silicone moieties.

15. A block copolymer according to claim 14 being obtainable by a method as claimed in any one of claims 9 to 13.

16. Organopolysiloxane-polyurea block copolymer as claimed in claim 14 wherein Z is selected from the group consisting of hexamethylene, methylene bis(phenylene), tetramethylene, isophorone, cyclohexylene and methylene dicyclohexylene.

17. Block copolymer as claimed in claim 14 wherein R is methyl.

18. Organopolysiloxane-polyurea block copolymer as claimed in any of claims 14 to 17 wherein the molecular weight of the organopolysiloxane segments is in the range 4,000 to 7,000.

19. Organopolysiloxane-polyurea block copolymer as claimed in any of claims 14 to 17 wherein the molecular weight of the organopolysiloxane segments is in the range 7,000 to 25,000.

20. Organopolysiloxane-polyurea block copolymer as claimed in any of claims 14 to 17 wherein the molecular weight of the organopolysiloxane segments is in the range of 25,000 to 70,000.

21. A release agent comprising a block copolymer as claimed in any of claims 14 to 18.

22. A release agent as claimed in claim 21 wherein the copolymer comprises from 15% to 70% hard (diisocyanate) segments.

23. A release agent as claimed in claim 21 which comprises a difunctional amine chain extender.

24. A release agent as claimed in claim 23 wherein said diamine chain extender is selected from 1,3-di(4 piperidyl)propane (DIPIP) and polytetramethylene oxide diamine having a molecular weight of from 5,000 to 25,000 and a functionality approaching 2.

25. Pressure-sensitive adhesive material comprising a backing member having a layer of pressure-sensitive adhesive on one surface thereof and a layer of release agent as claimed in any one of claims 21 to 24 on an opposite surface thereof.

26. A pressure-sensitive adhesive tape comprising a backing member having a layer of pressure-sensitive adhesive on one surface thereof and a low adhesive backsize coating on an opposite surface thereof said backsize coating comprising a release agent as claimed in any of claims 21 to 24.

27. A pressure-sensitive adhesive composition comprising block copolymer as claimed in claim 20, tackified with a compatible hydroxy-functional silicone tackifier resin.

28. Pressure-sensitive adhesive comprising a blend of a block copolymer as claimed in claim 14 with a hydroxy-functional silicone tackifier resin, said block copolymer having silicone segments of molecular weight in the range of 25,000 to 70,000 and a hard segment content of 0.5 to 10%.

## Claims (Claims for the following Contracting State(s): ES)

1. An anhydrous solid compound of general formula: 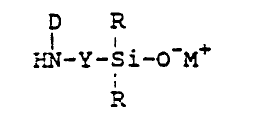 where:
D is hydrogen, an alkyl group of 1 to 10 carbon atoms, phenyl or an alkylene radical of 1 to 10 carbon atoms which completes a ring structure including Y to form a heterocyclic ring;
Y is an alkylene radical of 1 to 10 carbon atoms;
R is a monovalent optionally substituted alkyl radical having from 2 to 12 carbon atoms, a vinylidene radical or an optionally substituted phenyl radical, subject to the proviso that at least 50% of the R radicals are methyl, and
M⁺ is the cation K⁺, Li⁺ or N(CH₃)₄ ⁺.

2. A method of making an organopolysiloxane diamine comprising the steps:
i) combining under reaction conditions;
a) amine-functional end blocker of the general formula: 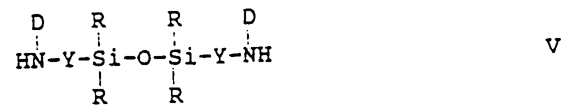 where R, Y and D are as defined in claim 1;
b) sufficient cyclic siloxane to react with said amine-functional end blocker to form an organopolysiloxane diamine having a molecular weight less than 2,000 and the general formula: 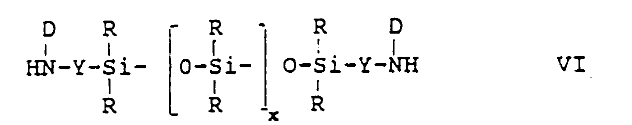 where 4 ≤ x ≤ 40 and
c) a catalytic amount not exceeding 0.1% by weight based on the ultimate weight of the final organopolysiloxane diamine of an essentially anhydrous amine silanolate catalyst which is formed ex situ;
ii) continuing the reaction until substantially all of said amine-functional end blocker is consumed, and
iii) adding additional cyclic siloxane until an organopolysiloxane diamine of general formula: 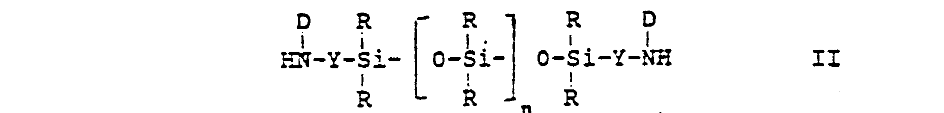 wherein n > x and is sufficient, for the organopolysiloxane diamine to have a molecular weight of at least 4000.

3. A method as claimed in claim 2 wherein said anhydrous silanolate catalyst has the general formula defined in claim 1.

4. A method as claimed in claim 2 or claim 3 wherein said catalytic amount is less than 0.05% by weight of the organopolysiloxane diamine of general fomula II.

5. A method as claimed in claim 4 wherein said catalytic amount is from 0.005 to 0.03 weight percent of the organopolysiloxane diamine of general formula II.

6. A method as claimed in any of claims 2 to 5 wherein said reaction conditions comprise a reaction temperature range of about 80°C to about 90°C, a reaction time of about 5 to 7 hours, and dropwise addition of said additional cyclic siloxane.

7. An organopolysiloxane diamine of general formula II as defined in claim 2, said organopolysiloxane diamine having a molecular weight of 5,000 to 70,000, and being substantially free of non-amine terminated silicone polymer moieties.

8. A method for the preparation of an organopolysiloxane diamine according to claim 7 as claimed in any one of claims 2 to 6.

9. A method of making an organopolysiloxane-polyurea block copolymer, comprising the polymerisation of:
i) a diamine as claimed in claim 7;
ii) at least one diisocyanate having the formula:
OCN-Z-NCO
where Z is a divalent radical selected from phenylene, alkylene, aralkylene and cycloalkylene, the molar ratio of diamine to diisocyanate being maintained in the range 1:0.95 to 1:1.05, and
iii) optionally up to 95 weight percent chain extender selected from diamines, isocyanate-capped dihydroxy compounds or mixtures thereof.

10. A method as claimed in claim 9 wherein said diisocyanate is toluene diisocyanate, p-phenylene diisocyanate or bis-(phenylene) diisocyanate.

11. A method as claimed in claim 9 wherein said diisocyanate is tetramethylene diisocyanate or hexamethylene diisocyanate.

12. A method as claimed in claim 9 wherein said diisocyanate is methylene bis(phenylisocyanate) or tetramethylxylene diisocyanate.

13. A method as claimed in claim 9 wherein said diisocyanate is cyclohexyldiisocyanate, isophorone diisocyanate or methylene dicyclohexyl diisocyanate.

14. Organopolysiloxane-polyurea block copolymer comprising the recurring unit: 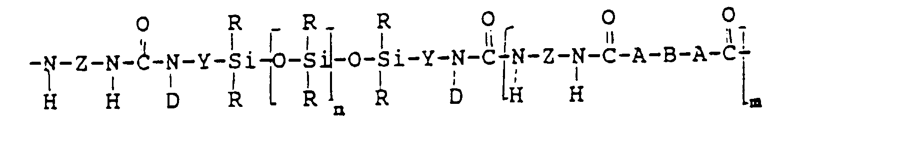
wherein Z is as defined in claim 9;
R, Y and D are as defined in claim 1;
B is a divalent radical selected from alkylene, aralkylene, cycloalkylene, phenylene, polyethylene oxide, polytetramethylene oxide, polycaprolactone and mixtures thereof;
A is a difunctional moiety selected from -O- and 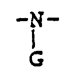 where G is hydrogen, an alkyl radical of 1 to 10 carbon atoms, phenyl, or an alkylene radical which completes a ring structure including B to form a heterocycle;
n≥50, and
o ≤ m ≤ 25,
said block copolymer being substantially free from contamination from monofunctional or non-functional non-amine terminated silicone moieties.

15. A method of preparing a block copolymer according to claim 14 as claimed in any one of claims 9 to 13.

16. Organopolysiloxane-polyurea block copolymer as claimed in claim 14 wherein Z is selected from the group consisting of hexamethylene, methylene bis(phenylene), tetramethylene, isophorone, cyclohexylene and methylene dicyclohexylene.

17. Block copolymer as claimed in claim 14 wherein R is methyl.

18. Organopolysiloxane-polyurea block copolymer as claimed in any of claims 14 and 16 to 17 wherein the molecular weight of the organopolysiloxane segments is in the range 4,000 to 7,000.

19. Organopolysiloxane-polyurea block copolymer as claimed in any of claims 14 and 16 to 17 wherein the molecular weight of the organopolysiloxane segments is in the range 7,000 to 25,000.

20. Organopolysiloxane-polyurea block copolymer as claimed in any of claims 14 and 16 to 17 wherein the molecular weight of the organopolysiloxane segments is in the range of 25,000 to 70,000.

21. A release agent comprising a block copolymer as claimed in any of claims 14 and 16 to 18.

22. A release agent as claimed in claim 21 wherein the copolymer comprises from 15% to 70% hard (diisocyanate) segments.

23. A release agent as claimed in claim 21 which comprises a difunctional amine chain extender.

24. A release agent as claimed in claim 23 wherein said diamine chain extender is selected from 1,3-di(4 piperidyl)propane (DIPIP) and polytetramethylene oxide diamine having a molecular weight of from 5,000 to 25,000 and a functionality approaching 2.

25. Pressure-sensitive adhesive material comprising a backing member having a layer of pressure-sensitive adhesive on one surface thereof and a layer of release agent as claimed in any one of claims 21 to 24 on an opposite surface thereof.

26. A pressure-sensitive adhesive tape comprising a backing member having a layer of pressure-sensitive adhesive on one surface thereof and a low adhesive backsize coating on an opposite surface thereof said backsize coating comprising a release agent as claimed in any of claims 21 to 24.

27. A pressure-sensitive adhesive composition comprising block copolymer as claimed in claim 20, tackified with a compatible hydoxy-functional silicone tackifier resin.

28. Pressure-sensitive adhesive comprising a blend of a block copolymer as claimed in claim 14 with a hydroxy-functional silicone tackifier resin, said block copolymer having silicone segments of molecular weight in the range of 25,000 to 70,000 and a hard segment content of 0.5 to 10%.

29. A method for the preparation of a release agent using a block copolymer as defined in any of claims 14 and 16 to 18.

30. A method as claimed in claim 29 wherein the copolymer comprises from 15% to 70% hard (diisocyanate) segments.

31. A method as claimed in claim 29 which comprises using a block copolymer containing residues of a difunctional amine chain extender.

32. A method as claimed in claim 31 wherein said diamine chain extender is selected from 1,3-di (4 piperidyl)propane (DIPIP) and polytetramethylene oxide diamine having a molecular weight of from 5, 000 to 25, 000 and a functionality approaching 2.

33. A method for the preparation of pressure-sensitive adhesive material comprising combining a backing member having a layer of pressure-sensitive adhesive on one surface thereof with a layer of release agent as claimed in any one of claims 21 to 24 on an opposite surface thereof.

34. A method for the preparation of a pressure-sensitive adhesive tape comprising combining a backing member having a layer of pressure-sensitive adhesive on one surface thereof with a low adhesive backsize coating on an opposite surface thereof said backsize coating comprising a release agent as claimed in any of claims 21 to 24.

35. A method for the preparation of a pressure-sensitive adhesive composition comprising combining block copolymer as claimed in claim 20, with a compatible hydroxy-functional silicone tackifier resin.

36. A method for the preparation of pressure-sensitive adhesive comprising combining a blend of a block copolymer as claimed in claim 14 with a hydroxy-functional silicone tackifier resin, said block copolymer having silicone segments of molecular weight in the range of 25, 000 to 70, 000 and a hard segment content of 0.5 to 10%.

## Patentansprüche (Patentansprüche für folgende(n) Vertragsstaat(en): BE, CH, DE, FR, GB, IT, LI, NL, SE)

1. Wasserfreie, feste Verbindung der allgemeinen Formel: 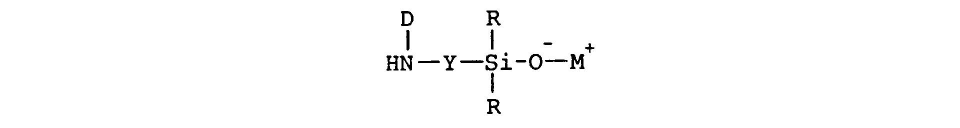 worin sind:
D Wasserstoff, eine Alkyl-Gruppe mit 1 bis 10 Kohlenstoffatomen, Phenyl- oder ein Alkylen-Rest mit 1 bis 10 Kohlenstoffatomen, welcher eine Ringstruktur schließt, einschließend Y, um einen heterocyclischen Ring zu bilden;
Y ein Alkylen-Rest mit 1 bis 10 Kohlenstoffatomen;
R ein einwertiger, wahlweise substituierter Alkyl-Rest mit 2 bis 12 Kohlenstoffatomen, ein Vinyliden-Rest oder ein wahlweise substituierter Phenyl-Rest unter der Voraussetzung, daß mindestens 50 % der Reste R Methyl sind; und
M⁺ das Kation K⁺, Li⁺ oder N(CH₃)₄⁺.

2. Verfahren zur Herstellung eines Organopolysiloxandiamins, umfassend die Schritte:
i) Vereinigen unter Reaktionsbedingungen;
a) einen aminfunktionellen Endblocker der allgemeinen Formel: 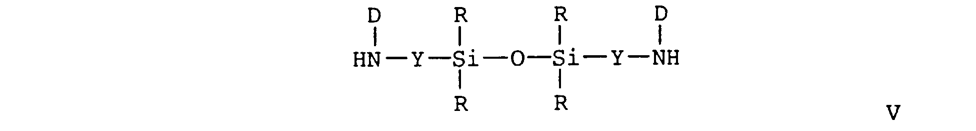 worin R, Y und D wie in Anspruch 1 festgelegt sind;
b) ausreichend cyclisches Siloxan zum Reagieren mit dem aminfunktionellen Endblocker unter Erzeugung eines Organopolysiloxandiamins mit einer relativen Molekülmasse kleiner als 2.000 und der allgemeinen Formel: 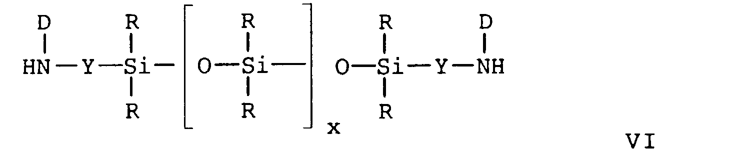 worin 4 ≤ x ≤ 40 gilt, und
c) eine katalytische Menge eines weitgehend wasserfreien, ex situ gebildeten Aminsilanolat-Katalysator, welche Menge 0,1 Gewichtsprozent bezogen auf das Endgewicht des fertigen Organopolysiloxandiamins nicht überschreitet;
ii) Fortsetzen der Reaktion bis im wesentlichen der gesamte aminfunktionelle Endblocker verbraucht ist; sowie
iii) Zusetzen von zusätzlichem cyclischen Siloxan bis zu einem Organopolysiloxandiamin der allgemeinen Formel: 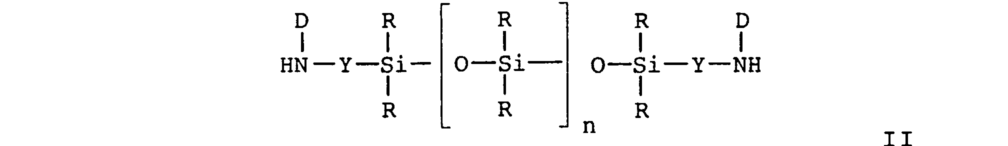 worin n > x ist und ausreichend dafür, daß das Organopolysiloxandiamin eine relative Molekülmasse von mindestens 4.000 hat.

3. Verfahren nach Anspruch 2, bei welchem der wasserfreie Silanolat-Katalysator die in Anspruch 1 festgelegte allgemeine Formel hat.

4. Verfahren nach Anspruch 2 oder 3, bei welchem die katalytische Menge kleiner ist als 0,05 Gewichtsprozent des Organopolysiloxandiamins der allgemeinen Formel II.

5. Verfahren nach Anspruch 4, bei welchem die katalytische Menge 0,005 % ... 0,03 Gewichtsprozent des Organopolysiloxandiamins der allgemeinen Formel II beträgt.

6. Verfahren nach einem der Ansprüche 2 bis 5, bei welchem die Reaktionsbedingungen einen Bereich der Reaktionstemperatur von etwa 80 °C bis etwa 90 °C, eine Reaktionsdauer von etwa 5 ... 7 Stunden und einen tropfenweisen Zusatz des zusätzlichen cyclischen Siloxans umfassen.

7. Organopolysiloxandiamin der allgemeinen Formel II nach Anspruch 2 mit einer relativen Molekülmasse von 5.000 ... 70.000 und weitgehend frei von nicht mit Amin terminierten Siliconpolymer-Teilen.

8. Organopolysiloxandiamin nach Anspruch 7, das mit Hilfe eines Verfahrens nach einem der Ansprüche 2 bis 6 erhalten werden kann.

9. Verfahren zur Herstellung eines Organopolysiloxan/Polyharnstoff-Blockcopolymers, umfassend die Polymerisation von:
i) einem Diamin nach Anspruch 7;
ii) mindestens einem Diisocyanat der Formel:
OCN-Z-NCO
worin Z ein zweiwertiger Rest ist, ausgewählt aus Phenylen, Alkylen, Aralkylen und Cycloalkylen, und das Molverhältnis von Diamin zu Diisocyanat im Bereich von 1:0,95 ... 1:1,05 gehalten wird, sowie
iii) wahlweise bis zu 95 Gewichtsprozent Kettenverlängerer, ausgewählt aus Diaminen, Isocyanat-geblockten Dihydroxy-Verbindungen oder Mischungen davon.

10. Verfahren nach Anspruch 9, bei welchem das Diisocyanat Toluoldiisocyanat, p-Phenylendiisocyanat oder Bis(phenylen)diisocyanat ist.

11. Verfahren nach Anspruch 9, bei welchem das Diisocyanat Tetramethylendiisocyanat oder Hexamethylendiisocyanat ist.

12. Verfahren nach Anspruch 9, bei welchem das Diisocyanat Methylen-bis(phenylisocyanat) oder Tetramethylxyloldiisocyanat ist.

13. Verfahren nach Anspruch 9, bei welchem das Diisocyanat Cyclohexyldiisocyanat, Isophorondiisocyanat oder Methylendicyclohexyldiisocyanat ist.

14. Organopolysiloxan/Polyharnstoff-Blockcopolymer, umfassend die repetierende Einheit: 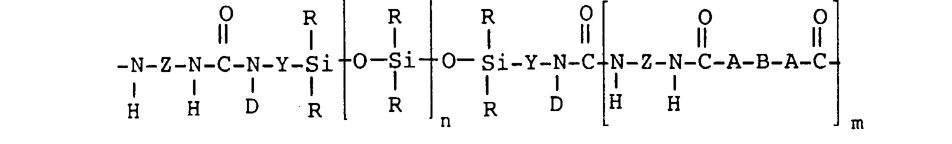 worin sind:
Z wie in Anspruch 9 festgelegt;
R, Y und D wie in Anspruch 1 festgelegt;
B ein zweiwertiger Rest, ausgewählt aus Alkylen, Aralkylen, Cycloalkylen, Phenylen, Polyethylenoxid, Polytetramethylenoxid, Polycaprolacton und Mischungen davon;
A ein bifunktioneller Teil, ausgewählt aus -O- und 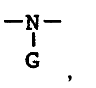 worin G Wasserstoff, ein Alkyl-Rest mit 1 bis 10 Kohlenstoffatomen, Phenyl- oder ein Alkylen-Rest ist, der eine Ringstruktur schließt, einschließend B zur Erzeugung eines heterocyclischen Ringes;
n ≥ 50 sowie
o ≤ m ≤ 25,
wobei das Blockcopolymer weitgehend frei ist von Kontamination aus monofunktionellen oder nichtfunktionellen, nicht mit Amin terminierten Silicon-Teilen.

15. Blockcopolymer nach Anspruch 14, das mit Hilfe eines Verfahrens nach einem der Ansprüche 9 bis 13 erhalten werden kann.

16. Organopolysiloxan/Polyharnstoff-Blockcopolymer nach Anspruch 14, worin Z ausgewählt wird aus der Gruppe, bestehend aus Hexamethylen, Methylen-bis(phenylen), Tetramethylen, Isophoron, Cyclohexylen und Methylendicyclohexylen.

17. Blockcopolymer nach Anspruch 14, bei welchem R Methyl ist.

18. Organopolysiloxan/Polyharnstoff-Blockcopolymer nach einem der Ansprüche 14 bis 17, bei welchem die relative Molekülmasse der Organopolysiloxan-Segmente im Bereich von 4.000 ... 7.000 liegt.

19. Organopolysiloxan/Polyharnstoff-Blockcopolymer nach einem der Ansprüche 14 bis 17, bei welchem die relative Molekülmasse der Organopolysiloxan-Segmente im Bereich von 7.000 ... 25.000 liegt.

20. Organopolysilox/Polyharnstoff-Blockcopolymer nach einem der Ansprüche 14 bis 17, bei welchem die relative Molekülmasse der Organopolysiloxan-Segmente im Bereich von 25.000 ... 70.000 liegt.

21. Release-Mittel, umfassend ein Blockcopolymer nach einem der Ansprüche 14 bis 18.

22. Release-Mittel nach Anspruch 21, bei welchem das Copolymer 15 ... 70 % harte Segmente (Diisocyanat) umfaßt.

23. Release-Mittel nach Anspruch 21, das einen bifunktionellen Amin-Kettenverlängerer aufweist.

24. Release-Mittel nach Anspruch 23, bei welchem der Diamin-Kettenverlängerer ausgewählt wird aus 1,3-Di(4-piperidyl)propan (DIPIP) und Polytetramethylenoxiddiamin mit einer relativen Molekülmasse von 5.000 ... 25.000 und einer Funktionalität, die gegen 2 geht.

25. Selbstklebendes Material, umfassend einen Träger mit einer Lage Haftklebstoff auf einer seiner Oberflächen und einer Lage eines Release-Mittels nach einem der Ansprüche 21 bis 24 auf der davon gegenüberliegenden Oberfläche.

26. Haftklebeband, umfassend einen Träger mit einer Lage Haftklebstoff auf einer seiner Oberflächen und einer klebschwachen Rückseitenbeschichtung mit einem Release-Mittel nach einem der Ansprüche 21 bis 24.

27. Haftklebstoff-Zusammensetzung, umfassend ein Blockcopolymer nach Anspruch 20, tackifiziert mit einem kompatiblen, hydroxyfunktionellen Silicon-Tackifierharz.

28. Haftklebstoff, umfassend ein Blend eines Copolymers nach Anspruch 14 mit einem hydroxyfunktionellen Silicon-Tackifierharz, wobei das Blockcopolymer Silicon-Segmente mit einer relativen Molekülmasse im Bereich von 25.000 ... 70.000 und einem Gehalt von hartem Segment von 0,5 ... 10 % aufweist.

## Patentansprüche (Patentansprüche für folgende(n) Vertragsstaat(en): ES)

1. Wasserfreie, feste Verbindung der allgemeinen Formel: 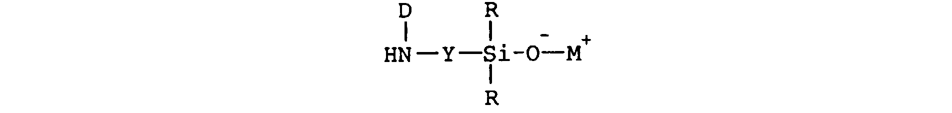 worin sind:
D Wasserstoff, eine Alkyl-Gruppe mit 1 bis 10 Kohlenstoffatomen, Phenyl- oder ein Alkylen-Rest mit 1 bis 10 Kohlenstoffatomen, welcher eine Ringstruktur schließt, einschließend Y, um einen heterocyclischen Ring zu bilden;
Y ein Alkylen-Rest mit 1 bis 10 Kohlenstoffatomen;
R ein einwertiger, wahlweise substituierter Alkyl-Rest mit 2 bis 12 Kohlenstoffatomen, ein Vinyliden-Rest oder ein wahlweise substituierter Phenyl-Rest unter der Voraussetzung, daß mindestens 50 % der Reste R Methyl sind; und
M⁺ das Kation K⁺, Li⁺ oder N(CH₃)₄ ⁺.

2. Verfahren zur Herstellung eines Organopolysiloxandiamins, umfassend die Schritte:
i) Vereinigen unter Reaktionsbedingungen;
a) einen aminfunktionellen Endblocker der allgemeinen Formel: 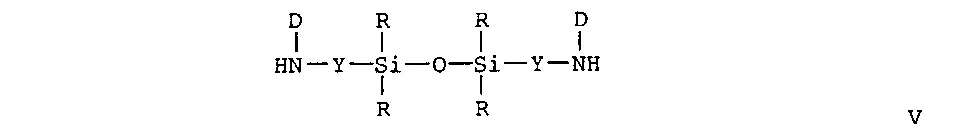 worin R, Y und D wie in Anspruch 1 festgelegt sind;
b) ausreichend cyclisches Siloxan zum Reagieren mit dem aminfunktionellen Endblocker unter Erzeugung eines Organopolysiloxandiamins mit einer relativen Molekülmasse kleiner als 2.000 und der allgemeinen Formel: 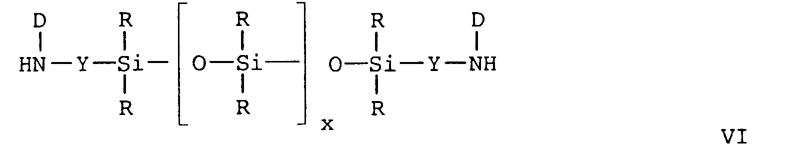 worin 4 ≤ x ≤ 40 gilt, und
c) eine katalytische Menge eines weitgehend wasserfreien, ex situ gebildeten Aminsilanolat-Katalysator, welche Menge 0,1 Gewichtsprozent bezogen auf das Endgewicht des fertigen Organopolysiloxandiamins nicht überschreitet;
ii) Fortsetzen der Reaktion bis im wesentlichen der gesamte aminfunktionelle Endblocker verbraucht ist; sowie
iii) Zusetzen von zusätzlichem cyclischen Siloxan bis zu einem Organopolysiloxandiamin der allgemeinen Formel: 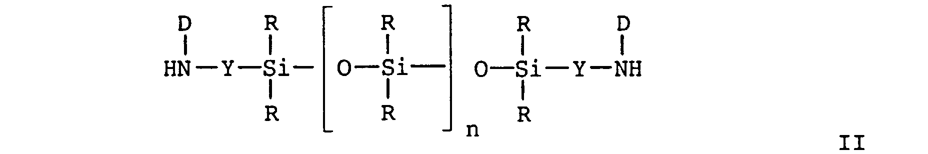 worin n > x ist und ausreichend dafür, daß das Organopolysiloxandiamin eine relative Molekülmasse von mindestens 4.000 hat.

3. Verfahren nach Anspruch 2, bei welchem der wasserfreie Silanolat-Katalysator die in Anspruch 1 festgelegte allgemeine Formel hat.

4. Verfahren nach Anspruch 2 oder 3, bei welchem die katalytische Menge kleiner ist als 0,05 Gewichtsprozent des Organopolysiloxandiamins der allgemeinen Formel II.

5. Verfahren nach Anspruch 4, bei welchem die katalytische Menge 0,005 % ... 0,03 Gewichtsprozent des Organopolysiloxandiamins der allgemeinen Formel II beträgt.

6. Verfahren nach einem der Ansprüche 2 bis 5, bei welchem die Reaktionsbedingungen einen Bereich der Reaktionstemperatur von etwa 80 °C bis etwa 90 °C, eine Reaktionsdauer von etwa 5 ... 7 Stunden und einen tropfenweisen Zusatz des zusätzlichen cyclischen Siloxans umfassen.

7. Organopolysiloxandiamin der allgemeinen Formel II nach Anspruch 2 mit einer relativen Molekülmasse von 5.000 ... 70.000 und weitgehend frei von nicht mit Amin terminierten Siliconpolymer-Teilen.

8. Verfahren nach einem der Ansprüche 2 bis 6 zur Herstellung eines Organopolysiloxandiamins nach Anspruch 7.

9. Verfahren zur Herstellung eines Organopolysiloxan/Polyharnstoff-Blockcopolymers, umfassend die Polymerisation von:
i) einem Diamin nach Anspruch 7;
ii) mindestens einem Diisocyanat der Formel OCN-Z-NCO, worin Z ein zweiwertiger Rest ist, ausgewählt aus Phenylen, Alkylen, Aralkylen und Cycloalkylen, und das Molverhältnis von Diamin zu Diisocyanat im Bereich von 1:0,95 ... 1:1,05 gehalten wird, sowie
iii) wahlweise bis zu 95 Gewichtsprozent Kettenverlängerer, ausgewählt aus Diaminen, Isocyanat-geblockten Dihydroxy-Verbindungen oder Mischungen davon.

10. Verfahren nach Anspruch 9, bei welchem das Diisocyanat Toluoldiisocyanat, p-Phenylendiisocyanat oder Bis(phenylen)diisocyanat ist.

11. Verfahren nach Anspruch 9, bei welchem das Diisocyanat Tetramethylendiisocyanat oder Hexamethylendiisocyanat ist.

12. Verfahren nach Anspruch 9, bei welchem das Diisocyanat Methylen-bis(phenylisocyanat) oder Tetramethylxyloldiisocyanat ist.

13. Verfahren nach Anspruch 9, bei welchem das Diisocyanat Cyclohexyldiisocyanat, Isophorondiisocyanat oder Methylendicyclohexyldiisocyanat ist.

14. Organopolysiloxan/Polyharnstoff-Blockcopolymer, umfassend die repetierende Einheit: 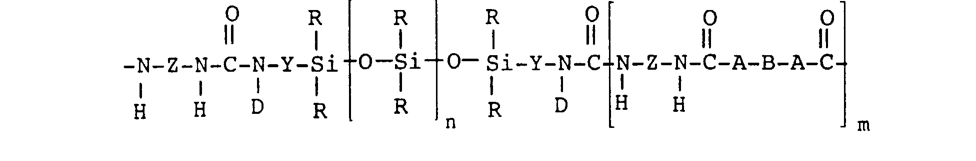 worin sind:
Z wie in Anspruch 9 festgelegt;
R, Y und D wie in Anspruch 1 festgelegt;
B ein zweiwertiger Rest, ausgewählt aus Alkylen, Aralkylen, Cycloalkylen, Phenylen, Polyethylenoxid, Polytetramethylenoxid, Polycaprolacton und Mischungen davon;
A ein bifunktioneller Teil, ausgewählt aus -O- und 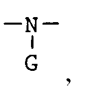 worin G Wasserstoff, ein Alkyl-Rest mit 1 bis 10 Kohlenstoffatomen, Phenyl- oder ein Alkylen-Rest ist, der eine Ringstruktur schließt, einschließend B zur Erzeugung eines heterocyclischen Ringes;
n ≥ 50 sowie
o ≤ m ≤ 25,
wobei das Blockcopolymer weitgehend frei ist von Kontamination aus monofunktionellen oder nichtfunktionellen, nicht mit Amin terminierten Silicon-Teilen.

15. Verfahren nach einem der Ansprüche 9 bis 13 zur Herstellung eines Blockcopolymers nach Anspruch 14.

16. Organopolysiloxan/Polyharnstoff-Blockcopolymer nach Anspruch 14, worin Z ausgewählt wird aus der Gruppe, bestehend aus Hexamethylen, Methylen-bis(phenylen), Tetramethylen, Isophoron, Cyclohexylen und Methylendicyclohexylen.

17. Blockcopolymer nach Anspruch 14, bei welchem R Methyl ist.

18. Organopolysiloxan/Polyharnstoff-Blockcopolymer nach einem der Ansprüche 14 und 16 bis 17 bei welchem die relative Molekülmasse der Organopolysiloxan-Segmente im Bereich von 4.000 ... 7.000 liegt.

19. Organopolysiloxan/Polyharnstoff-Blockcopolymer nach einem der Ansprüche 14 und 16 bis 17 bei welchem die relative Molekülmasse der Organopolysiloxan-Segmente im Bereich von 7.000 ... 25.000 liegt.

20. Organopolysiloxan/Polyharnstoff-Blockcopolymer nach einem der Ansprüche 14 und 16 bis 17 bei welchem die relative Molekülmasse der Organopolysiloxan-Segmente im Bereich von 25.000 ... 70.000 liegt.

21. Release-Mittel, umfassend ein Blockcopolymer nach einem der Ansprüche 14 und 16 bis 18.

22. Release-Mittel nach Anspruch 21, bei welchem das Copolymer 15 ... 70 % harte Segmente (Diisocyanat) umfaßt.

23. Release-Mittel nach Anspruch 21, das einen bifunktionellen Amin-Kettenverlängerer aufweist.

24. Release-Mittel nach Anspruch 23, bei welchem der Diamin-Kettenlängerer ausgewählt wird aus 1,3-Di(4-piperidyl)propan (DIPIP) und Polytetramethylenoxiddiamin mit einer relativen Molekülmasse von 5.000 ... 25.000 und einer Funktionalität, die gegen 2 geht.

25. Selbstklebendes Material, umfassend einen Träger mit einer Lage Haftklebstoff auf einer seiner Oberflächen und einer Lage eines Release-Mittels nach einem der Ansprüche 21 bis 24 auf der davon gegenüberliegenden Oberfläche.

26. Haftklebeband, umfassend einen Träger mit einer Lage Haftklebstoff auf einer seiner Oberflächen und einer klebschwachen Rückseitenbeschichtung mit einem Release-Mittel nach einem der Ansprüche 21 bis 24.

27. Haftklebstoff-Zusammensetzung, umfassend ein Blockcopolymer nach Anspruch 20, tackifiziert mit einem kompatiblen, hydroxyfunktionellen Silicon-Tackifierharz.

28. Haftklebstoff, umfassend ein Blend eines Copolymers nach Anspruch 14 mit einem hydroxyfunktionellen Silicon-Tackifierharz, wobei das Blockcopolymer Silicon-Segmente mit einer relativen Molekülmasse im Bereich von 25.000 ... 70.000 und einem Gehalt von hartem Segment von 0,5 ... 10 % aufweist.

29. Verfahren zur Herstellung eines Release-Mittels, verwendend ein Blockcopolymer nach Anspruch 14 und 16 bis 18.

30. Verfahren nach Anspruch 29, bei welchem das Copolymer 15 ... 70 % harte Segmente (Diisocyanat) umfaßt.

31. Verfahren nach Anspruch 29, verwendend ein Blockcopolymer,enthaltend Reste eines bifunktionellen Amin-Kettenverlängerers.

32. Verfahren nach Anspruch 31, bei welchem der Diamin-Kettenverlängerer ausgewählt wird aus 1,3-Di(4-piperidyl)propan (DIPIP) und Polytetramethylenoxiddiamin mit einer relativen Molekülmasse von 5.000 ... 25.000 und einer Funktionalität, die gegen 2 geht.

33. Verfahren zu Herstellung von selbstklebendem Material, umfassend einen Träger mit einer Lage Haftklebstoff auf einer seiner Oberflächen mit einer Lage eines Release-Mittels nach einem der Ansprüche 21 bis 24 auf der davon gegenüberliegenden Oberfläche.

34. Verfahren zu Herstellung von Haftklebeband, umfassend das Vereinigen eines Träger, der eine Lage Haftklebstoff auf einer seiner Oberflächen aufweist, mit einer klebschwachen Rückseitenbeschichtung auf der gegenüberliegenden Oberfläche davon, welche Rückseitenbeschichtung ein Release-Mittel nach einem der Ansprüche 21 bis 24 aufweist.

35. Verfahren zu Herstellung einer Haftklebstoff-Zusammensetzung, umfassend das Vereinigen eines Blockcopolymers nach Anspruch 20, mit einem kompatiblen, hydroxyfunktionellen Silicon-Tackifierharz.

36. Verfahren zu Herstellung eines Haftklebstoffes, umfassend das Vereinigen eines Blends eines Blockcopolymers nach Anspruch 14 mit einem hydroxyfunktionellen Silicon-Tackifierharz, wobei das Blockcopolymer Silicon-Segmente mit einer relativen Molekülmasse im Bereich von 25.000 ... 70.000 und einen Gehalt von hartem Segment von 0,5 ... 10 % aufweist.

## Revendications (Revendications pour l'(les) Etat(s) contractant(s) suivant(s): BE, CH, LI, DE, FR, GB, IT, NL, SE)

1. Composé solide anhydre de formule générale : 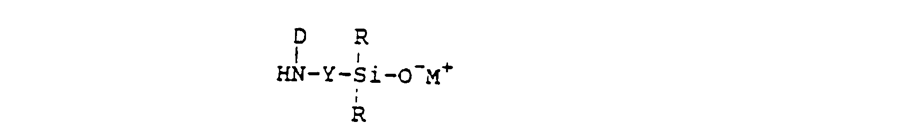 dans laquelle :
D est de l'hydrogène, un groupe alkyle de 1 à 10 atomes de carbone, du phényle ou un radical alkylène de 1 à 10 atomes de carbone qui forme une structure cyclique comprenant Y de manière à former un hétérocycle;
Y est un radical alkylène de 1 à 10 atomes de carbone;
R est un radical alkyle éventuellement substitué monovalent comportant de 2 à 12 atomes de carbone, un radical vinylidène ou un radical phényle éventuellement substitué, à la condition qu'au moins 50 % des radicaux R représentent du méthyle, et
M⁺ est le cation K⁺, Li⁺ ou N(CH₃)₄ ⁺.

2. Procédé de fabrication d'une organopolysiloxane diamine comprenant les étapes suivantes :
i) la combinaison sous des conditions réactionnelles :
(a) d'un bloqueur d'extrémité fonctionnel d'amine de la formule générale : 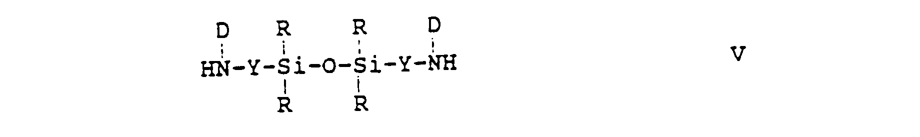 dans laquelle R, Y et D sont tels que définis dans la revendication 1;
(b) d'une quantité suffisante de siloxane cyclique pour réagir avec le bloqueur d'extrémité fonctionnel d'amine susdit pour former une organopolysiloxane diamine ayant un poids moléculaire inférieur ayant un poids moléculaire inférieur à 2.000 et la formule générale : 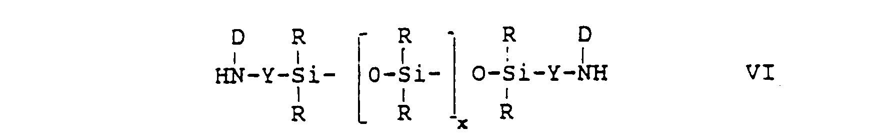 dans laquelle 4 ≤ x ≤ 40 et
(c) d'une quantité catalytique n'excédant pas 0,1 % en poids par rapport au poids final de l'organopolysiloxane diamine finale d'un catalyseur de silanolate d'amine essentiellement anhydre qui est formé ex situ :
ii) la poursuite de la réaction jusqu'à ce que pratiquement la totalité de ce bloqueur d'extrémité fonctionnel d'amine soit consommée, et
iii) l'addition de siloxane cyclique additionnel jusqu'à l'obtention d'une organopolysiloxane diamine de formule générale : 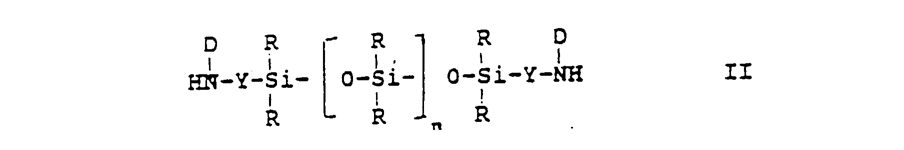 dans laquelle n > x et soit suffisant pour que l'organopolysiloxane diamine ait un poids moléculaire d'au moins 4.000.

3. Procédé suivant la revendication 2, dans lequel le catalyseur de silanolate anhydre a la formule générale définie dans la revendication 1.

4. Procédé suivant l'une ou l'autre des revendications 2 et 3, dans lequel la quantité catalytique précitée est inférieure à 0,05 % en poids de l'organopolysiloxane diamine de formule générale II.

5. Procédé suivant la revendication 4, dans lequel la quantité catalytique constitue de 0,005 à 0,03 % en poids de l'organopolysiloxane diamine de formule générale II.

6. Procédé suivant l'une quelconque des revendications 2 à 5, dans lequel les conditions réactionnelles précitées comprennent un intervalle de température réactionnelle d'environ 80°C à environ 90°C, un temps réactionnel d'environ 5 à 7 heures et une addition goutte à goutte du siloxane cyclique additionnel.

7. Organopolysiloxane diamine de formule générale II telle que définie à la revendication 2, ladite organopolysiloxane diamine ayant un poids moléculaire de 5.000 à 70.000 et étant pratiquement exempte de fragments de polymère de silicone à terminaison non aminée.

8. Organopolysiloxane diamine suivant la revendication 7, étant obtenable par un procédé suivant l'une quelconque des revendications 2 à 6.

9. Procédé de fabrication d'un copolymère bloc d'organopolysiloxane-polyurée, comprenant la polymérisation :
i) d'une diamine suivant la revendication 7;
ii) d'au moins un diisocyanate ayant la formule :
OCN-Z-NCO
dans laquelle Z est un radical divalent choisi parmi les radicaux phénylène, alkylène, aralkylène et cycloalkylène, le rapport molaire de la diamine au diisocyanate étant maintenu dans la gamme de 1/0,95 à 1/1,05, et
iii) d'éventuellement jusqu'à 95 % en poids d'un allongeur de chaîne choisi parmi les diamines, les composés dihydroxy à coiffe d'isocyanate et leurs mélanges,

10. Procédé suivant la revendication 9, dans lequel le diisocyanate est le toluène diisocyanate, le p-phénylène diisocyanate ou le bis (phénylène) diisocyanate.

11. Procédé suivant la revendication 9, dans lequel le diisocyanate est le tétraméthylène diisocyanate ou l'hexaméthylène diisocyanate.

12. Procédé suivant la revendication 9, dans lequel le diisocyanate est le méthylène bis(phénylisocyanate) ou le tétraméthylxylène diisocyanate.

13. Procédé suivant la revendication 9, dans lequel le diisocyanate est le cyclohexyl diisocyanate, l'isophorone diisocyanate ou le méthylène dicyclohexyl diisocyanate.

14. Copolymère bloc d'organopolysiloxanepolyurée comprenant l'unité structurale : 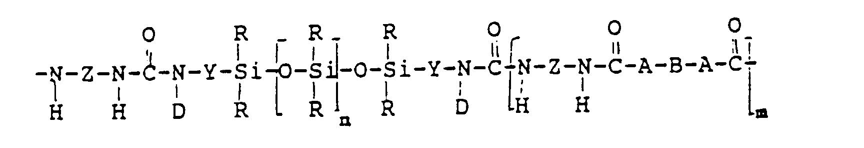 dans laquelle
Z est tel que défini à la revendication 9;
R, Y et D sont tels que définis à la revendication 1;
B est un radical divalent choisi parmi les radicaux alkylène, aralkylène, cycloalkylène, phénylène, oxyde de polyéthylène, oxyde de polytétraméthylène, polycaprolactone et leurs mélanges;
A est un fragment difonctionnel choisi parmi -O- et 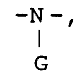 où G représente de l'hydrogène, un radical alkyle de 1 à 10 atomes de carbone, du phényle ou un radical alkylène qui forme une structure cyclique comprenant B de manière à former un hétérocycle;
n ≥ 50, et
o ≤ m ≤ 25,
le copolymère bloc précité étant pratiquement exempt de contamination provenant de fragments de silicone à terminaison non aminée monofonctionnels ou non fonctionnels.

15. Copolymère bloc suivant la revendication 14, étant obtenable par un procédé suivant l'une quelconque des revendications 9 à 13.

16. Copolymère bloc d'organopolysiloxanepolyurée suivant la revendication 14, dans lequel Z est choisi dans le groupe comprenant les radicaux hexaméthylène, méthylène bis(phénylène), tétraméthylène, isophorone, cyclohexylène et méthylène dicyclohexylène.

17. Copolymère bloc suivant la revendication 14, dans lequel R est du méthyle.

18. Copolymère bloc d'organopolysiloxanepolyurée suivant l'une quelconque des revendications 14 à 17, dans lequel le poids moléculaire des segments d'organopolysiloxane est dans la gamme de 4.000 à 7.000.

19. Copolymère bloc d'organopolysiloxanepolyurée suivant l'une quelconque des revendications 14 à 17, dans lequel le poids moléculaire des segments d'organopolysiloxane est dans la gamme de 7.000 à 25.000.

20. Copolymère bloc d'organopolysiloxanepolyurée suivant l'une quelconque des revendications 14 à 17, dans lequel le poids moléculaire des segments d'organopolysiloxane est dans la gamme de 25.000 à 70.000.

21. Agent de séparation comprenant un copolymère bloc suivant l'une quelconque des revendications 14 à 18.

22. Agent de séparation suivant la revendication 21, dans lequel le copolymère comprend de 15 à 70 % de segments (diisocyanate) durs.

23. Agent de séparation suivant la revendication 21, qui comprend un allongeur de chaîne d'amine difonctionnelle.

24. Agent de séparation suivant la revendication 23, dans lequel l'allongeur de chaîne de diamine est choisi parmi le 1,3-di(4-pipéridyl)propane (DIPIP) et la diamine d'oxyde de polytétraméthylène ayant un poids moléculaire de 5.000 à 25.000 et une fonctionnalité approchant 2.

25. Matière adhésive sensible à la pression comprenant un élément de support comportant une couche d'adhésif sensible à la pression sur une de ses surfaces et une couche d'agent de séparation suivant l'une quelconque des revendications 21 à 24 sur sa surface opposée.

26. Ruban d'adhésif sensible à la pression comprenant un élément de support comportant une couche d'adhésif sensible à la pression sur une de ses surfaces et un revêtement d'apprêt faiblement adhésif sur sa surface opposée, le revêtement d'apprêt susdit comprenant un agent de séparation suivant l'une quelconque des revendications 21 à 24.

27. Composition d'adhésif sensible à la pression comprenant un copolymère bloc suivant la revendication 20, rendu collant avec une résine formant colle à base de silicone à fonction hydroxy compatible.

28. Adhésif sensible à la pression comprenant un mélange d'un copolymère bloc suivant la revendication 14 avec une résine formant colle à base de silicone à fonction hydroxy, le copolymère bloc susdit comportant des segments de silicone d'un poids moléculaire dans la gamme de 25.000 à 70.000 et une teneur en segments durs de 0,5 à 10 %.

## Revendications (Revendications pour l'(les) Etat(s) contractant(s) suivant(s): ES)

1. Composé solide anhydre de formule générale : 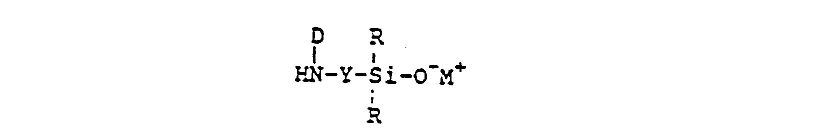 dans laquelle :
D est de l'hydrogène, un groupe alkyle de 1 à 10 atomes de carbone, du phényle ou un radical alkylène de 1 à 10 atomes de carbone qui forme une structure cyclique comprenant Y de manière à former un hétérocycle;
Y est un radical allène de 1 à 10 atomes de carbone;
R est un radical alkyle éventuellement substitué monovalent comportant de 2 à 12 atomes de carbone, un radical vinylidène ou un radical phényle éventuellement substitué, à la condition qu'au moins 50 % des radicaux R représentent du méthyle, et
M⁺ est le cation K⁺, Li⁺ ou N(CH₃)₄ ⁺.

2. Procédé de fabrication d'une organopolysiloxane diamine comprenant les étapes suivantes :
i) la combinaison sous des conditions réactionnelles :
(a) d'un bloqueur d'extrémité fonctionnel d'amine de la formule générale : 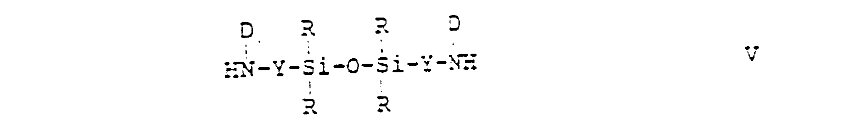 dans laquelle R, Y et D sont tels que définis dans la revendication 1;
(b) d'une quantité suffisante de siloxane cyclique pour réagir avec le bloqueur d'extrémité fonctionnel d'amine susdit pour former une organopolysiloxane diamine ayant un poids moléculaire inférieur ayant un poids moléculaire inférieur à 2.000 et la formule générale : 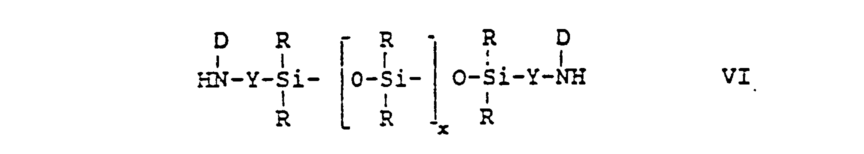 dans laquelle 4 ≤ x ≤ 40 et
(c) d'une quantité catalytique n'excédant pas 0,1 % en poids par rapport au poids final de l'organopolysiloxane diamine finale d'un catalyseur de silanolate d'amine essentiellement anhydre qui est formé ex situ :
ii) la poursuite de la réaction jusqu'à ce que pratiquement la totalité de ce bloqueur d'extrémité fonctionnel d'amine soit consommée, et
iii) l'addition de siloxane cyclique additionnel jusqu'à l'obtention d'une organopolysiloxane diamine de formule générale : 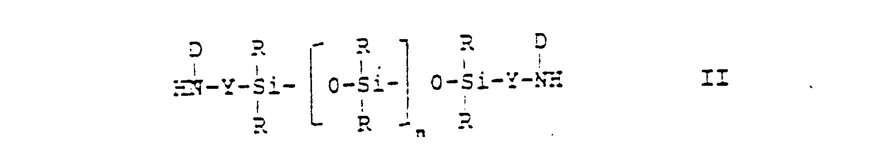 dans laquelle n > x et soit suffisant pour que l'organopolysiloxane diamine ait un poids moléculaire d'au moins 4.000.

3. Procédé suivant la revendication 2, dans lequel le catalyseur de silanolate anhydre a la formule générale définie dans la revendication 1.

4. Procédé suivant l'une ou l'autre des revendications 2 et 3, dans lequel la quantité catalytique précitée est inférieure à 0,05 % en poids de l'organopolysilozane diamine de formule générale II.

5. Procédé suivant la revendication 4, dans lequel la quantité catalytique constitue de 0,005 à 0,03 % en poids de l'organopolysiloxane diamine de formule générale II.

6. Procédé suivant l'une quelconque des revendications 2 à 5, dans lequel les conditions réactionnelles précitées comprennent un intervalle de température réactionnelle d'environ 80°C à environ 90°C, un temps réactionnel d'environ 5 à 7 heures et une addition goutte à goutte du siloxane cyclique additionnel.

7. Organopolysiloxane diamine de formule générale II telle que définie à la revendication 2, ladite organopolysiloxane diamine ayant un poids noléculaire de 5.000 à 70.000 et étant pratiquement exempte de fragments de polymère de silicone à terminaison non aminée.

8. Procédé pour la préparation d'un organopolysiloxane diamine suivant la revendication 7, suivant l'une quelconque des revendications 2 à 6.

9. Procédé de fabrication d'un copolymère bloc d'organopolysiloxane-polyurée, comprenant la polymérisation :
i) d'une diamine suivant la revendication 7;
ii) d'au moins un diisocyanate ayant la formule :
OCN-Z-NCO
dans laquelle Z est un radical divalent choisi parmi les radicaux phénylène, alkylène, aralkylène et cycloalkylène, le rapport molaire de la diamine au diisocyanate étant maintenu dans la gamme de 1/0,95 à 1/1,05, et
iii) d'éventuellement jusqu'à 95 % en poids d'un allongeur de chaîne choisi parmi les diamines, les composés dihydroxy à coiffe d'isocyanate et leurs mélanges,

10. Procédé suivant la revendication 9, dans lequel le diisocyanate est le toluène diisocyanate, le p-phénylène diisocyanate ou le bis (phénylène) diisocyanate.

11. Procédé suivant la revendication 9, dans lequel le diisocyanate est le tétraméthylène diisocyanate ou l'hexaméthylène diisocyanate.

12. Procédé suivant la revendication 9, dans lequel le diisocyanate est le méthylène bis(phénylisocyanate) ou le tétraméthylxylène diisocyanate.

13. Procédé suivant la revendication 9, dans lequel le diisocyanate est le cyclohexyl diisocyanate, l'isophorone diisocyanate ou le méthylène dicyclohexyl diisocyanate.

14. Copolymère bloc d'organopolysiloxanepolyurée comprenant l'unité structurale : 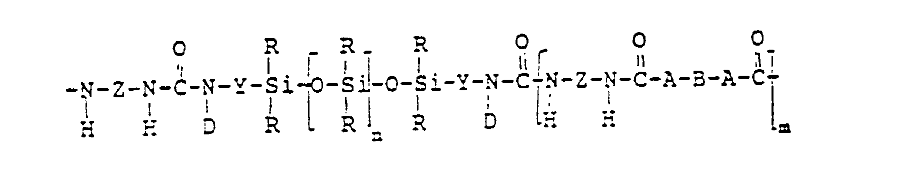 dans laquelle
Z est tel que défini à la revendication 9;
R, Y et D sont tels que définis à la revendication 1; B est un radical divalent choisi parmi les radicaux alkylène, aralkylène, cycloalkylène, phénylène, oxyde de polyéthylène, oxyde de polytétraméthylène, polycaprolactone en leurs mélanges;
A est un fragment difonctionnel choisi parmi -O- et 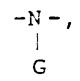 où G représente de l'hydrogène, un radical alkyle de 1 à 10 atomes de carbone, du phényle ou un radical alkylène qui forme une structure cyclique comprenant B de manière à former un hétérocycle;
n ≥ 50, et
o ≤ m ≤ 25,
le copolymère bloc précité étant pratiquement exempt de contamination provenant de fragments de silicone à terminaison non aminée monofonctionnels ou non fonctionnels.

15. Procédé pour la préparation d'un copolymère loc suivant la revendication 14, suivant l'une quelconque es revendications 9 à 13.

16. Copolymère bloc d'organopolysiloxane-polyurée suivant la revendication 14, dans lequel Z est choisi dans le groupe comprenant les radicaux hexaméthylène, méthylène bis(phénylène), tétraméthylène, isophorone, cyclohexylène et méthylène dicyclohexylène.

17. Copolymère bloc suivant la revendication 14, dans lequel R est du méthyle.

18. Copolymère bloc d'organopolysiloxane-polyurée suivant l'une quelconque des revendications 14 et 16 à 17 dans lequel le poids moléculaire des segments d'organopolysiloxane est dans la gamme de 4.000 à 7.000.

19. Copolymère bloc d'organopolysiloxane-polyurée suivant l'une quelconque des revendications 14 et 16 à 17 dans lequel le poids moléculaire des segments d'organopolysiloxane est dans la gamme de 7.000 à 25.000.

20. Copolymère bloc d'organopolysiloxane-polyurée suivant l'une quelconque des revendications 14 et 16 à 17 dans lequel le poids moléculaire des segments d'organopolysiloxane est dans la gamme de 25.000 à 70.000.

21. Agent de séparation comprenant un copolymère bloc suivant l'une quelconque des revendicatons 14 et 16 à 18.

22. Agent de séparation suivant la revendication 21, dans lequel le copolymère comprend de 15 à 70 % de segments (diisocyanate) durs.

23. Agent de séparation suivant la revendication 21, qui comprend un allongeur de chaîne d'amine difonctionnelle.

24. Agent de séparation suivant la revendication 23, dans lequel l'allongeur de chaîne de diamine est choisi parmi le 1,3-di(4-pipéridyl)propane (DIPIP) et la diamine d'oxyde de polytétraméthylène ayant un poids moléculaire de 5.000 à 25.000 et une fonctionnalité approchant 2.

25. Matière adhésive sensible à la pression comprenant un élément de support comportant une couche d'adhésif sensible à la pression sur une de ses surfaces et une couche d'agent de séparation suivant l'une quelconque des revendications 21 à 24 sur sa surface opposée.

26. Ruban d'adhésif sensible à la pression comprenant un élément de support comportant une couche d'adhésif sensible à la pression sur une de ses surfaces et un revêtement d'apprêt faiblement adhésif sur sa surface opposée, le revêtement d'apprêt susdit comprenant un agent de séparation suivant l'une quelconque des revendications 21 à 24.

27. Composition d'adhésif sensible à la pression comprenant un copolymère bloc suivant la revendication 20, rendu collant avec une résine formant colle à base de silicone à fonction hydroxy compatible.

28. Adhésif sensible à la pression comprenant un mélange d'un copolymère bloc suivant la revendication 14 avec une résine formant colle à base de silicone à fonction hydroxy, le copolymère bloc susdit comportant des segments de silicone d'un poids moléculaire dans la gamme de 25.000 à 70.000 et une teneur en segments durs de 0,5 à 10 %.

29. Procédé pour la préparation d'un agent de séparation utilisant un copolymère bloc suivant l'une quelconque des revendications 14 et 16 à 18.

30. Procédé suivant la revendication 29, dans lequel le copolymère comprend de 15 à 70 % de segments (diisocyanate) durs.

31. Procédé suivant la revendication 29, qui comprend l'utilisation d'un copolymère bloc contenant des résidus d'un allongeur de chaîne d'amine difonctionnelle.

32. Procédé suivant la revendication 31, dans lequel l'allongeur de chaîne de diamine est choisi parmi le 1,3-di(4-pipéridyl)propane (DIPIP) et la diamine d'oxyde de polytétraméthylène ayant un poids moléculaire de 5.000 à 25.000 et une fonctionnalité approchant 2.

33. Procédé pour la préparation d'une matière adhésive sensible à la pression comprenant se combinant un élément de support comportant une couche d'adhésif sensible à la pression sur une de ses surfaces avec une couche d'agent de séparation suivant l'une quelconque des revendications 21 à 24 sur sa surface opposée.

34. Procédé pour la préparation d'un ruban d'adhésif sensible à la pression comprenant se combinant un élément de support comportant une couche d'adhésif sensible à la pression sur une de ses surfaces avec un revêtement d'apprêt faiblement adhésif sur sa surface opposée, le revêtement d'apprêt susdit comprenant un agent de séparation suivant l'une quelconque des revendications 21 à 24.

35. Procédé pour la préparation d'un composition d'adhésif sensible à la pression comprenant se combinant un copolymère bloc suivant la revendication 20 avec une résine formant colle à base de silicone à fonction hydroxy compatible.

36. Procédé pour la préparation d'un adhésif sensible à la pression comprenant se combinant un mélange d'un copolymère bloc suivant la revendication 14 avec une résine formant colle à base de silicone à fonction hydroxy, le copolymère bloc susdit comportant des segments de silicone d'un poids moléculaire dans la gamme de 25.000 à 70.000 et une teneur en segments durs de 0,5 à 10 %.
